(19) Europäisches Patentamt / European Patent Office / Office européen des brevets

(11) **EP 1 924 009 B1**

(12) # EUROPEAN PATENT SPECIFICATION


(45) Date of publication and mention of the grant of the patent:
**20.05.2009 Bulletin 2009/21**

(51) Int Cl.:
***H04B 7/155*** *(2006.01)*

(21) Application number: **06024058.7**

(22) Date of filing: **20.11.2006**


(54) **Relay apparatus for relaying a data packet to be transmitted from a first partner transceiver to a second partner transceiver**

Relais zum Weiterleiten eines Datenpaketes gesendet von einem ersten Sender/Empfänger an einen zweiten Sender/Empfänger.

Relais pour transmettre un paquet de données d'un premier émetteur / récepteur vers un second émetteur / récepteur


(84) Designated Contracting States:
**DE FR GB**

(43) Date of publication of application:
**21.05.2008 Bulletin 2008/21**



(73) Proprietor: **NTT DoCoMo Inc.**
**Chiyoda-ku**
**Tokyo 100-6150 (JP)**

(72) Inventors:
- **Loyola, Luis, Dr.**
  **80539 München (DE)**
- **Aad, Imad, Dr.**
  **80689 München (DE)**
- **Widmer, Jörg, Dr.**
  **81539 München (DE)**
- **Hofmann, Philip**
  **80686 München (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**



(56) References cited:
**EP-A- 1 758 268** **WO-A-20/07000742**
**US-A1- 2004 266 339**

- **T. KORAKIS, S. NARAYANAN, A. BAGRI, S. PANWAR: "Implementing a cooperative MAC Protocol for wireless LANs" IEEE ICC 2006 PROCEEDINGS, vol. 10, June 2006 (2006-06), pages 4805-4810, XP002423960**
- **P. LIU, Z. TAO, S. PANWAR: "A cooperative MAC Protocol for wireless local area Networks" PROCEEDINGS OF IEEE INTERNATIONAL CONFERENCE ON COMMUNICATIONS 2005, 2005, pages 2962-2968, XP002423961**
- **A. BLETSAS, A. LIPPMAN, D.P. REED: "A simple distributed method for relay selection in cooperative diversity wireless networks, based on reciprocity and channel measurements" IEEE, 2005, XP002423962**
- **S. SHANKAR, C.-T. CHOU, M. GOSH: "Cooperative communication MAC (CMAC) - A New MAC protocol for next generation wireless LANs" INTERNATIONAL CONFERENCE ON WIRELESS NETWORKS, COMMUNICATIONS AND MOBILE COMPUTING, vol. 1, 13 June 2005 (2005-06-13), pages 1-6, XP010887925**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 1 924 009 B1

## Description

The present invention is in the field of wireless networks, where networks are considered that have a fixed infrastructure, ad hoc or multi-hop networks, as well as hybrids thereof, also known as wireless local area networks, wireless mesh networks or wireless multi-hop networks.

A reliable and fast communication between terminals and their associated access point (AP) is one of the key issues within any wireless local area network (WLAN) in order to avoid wasting power in retransmissions and to reduce the amount of traffic in the shared radio channel to a minimum. In fact, multiple retransmissions are a waste of valuable energy resources, usually provided by batteries on terminals, and retransmissions may also make inefficient use of radio resources and cause traffic congestions in case of a relatively high amount of traffic in the network. Transmitters in a WLAN based on IEEE 802.11 specifications adapt their modulation scheme and coding rate in order to tune to the current channel conditions and thus to maximize the throughput. Each pair of a modulation scheme and a code rate has its own associated curve of data throughput versus signal to noise ratio (SNR), which in turn defines the most appropriate modulation scheme and code rate pair for a given bit error ratio (BER) requirement at the receiver.

The technique to implement automatic selection of the data rate is a vendor-designed issue but can be divided basically into two approaches, which are statistics-based and SNR-based. In general, irrespective of the data rate selection mechanism terminals located closer to an AP are able to use higher-order modulation and code rates, and thus are able to transmit and receive data at higher data rates than terminals located at larger distances from an AP.

It is well known that terminals transmitting and receiving at low data rates in WLAN systems tend to reduce the overall throughput of the network harming the communication of terminals transmitting at higher data rates, cf. M. Heusse, F. Rousseau, G. Berger-Sabattel and A. Duda, "Performance Anomaly of IEEE 802.11b", Proc. of INFOCOM 2003. This happens because the time elapsing until a data frame is successfully transmitted is a key factor behind the performance of a WLAN system, assessed in terms of quality-of-service parameters such as throughput, delay, jitter, etc. For instance, the retransmission of a large data frame at a data rate of 6 Mbps in a congested IEEE 802.11a/g (WLAN) network has a much higher impact on the overall performance of the network than the retransmission of the same data frame at a data rate of 54 Mbps.

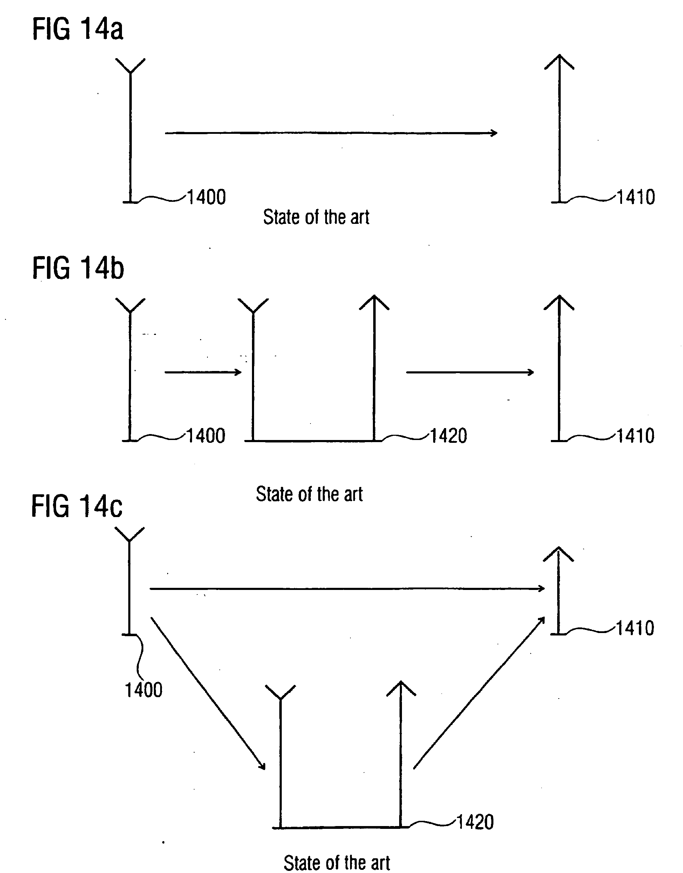

Cooperative communication in wireless networks is a new research area that has recently attracted a lot of interest in both academia and industry, cf. A. Nosratinia, T. E. Hunter, and A. Hedayat, "Cooperative Communication in Wireless Networks", IEEE Communications Magazine, October 2004. In a cooperative network, two or more nodes share their data and transmit jointly as a virtual antenna array. The figures 14a to 14c illustrate some state of the art concepts. Fig. 14a shows a transmitter 1400 carrying out a transmission directly to a receiver 1410, which is a straight forward and common transmission concept. Fig. 14b shows the transmitter 1400 communicating with the receiver 1410 via a relay station 1420. In this example the transmitter 1400 transmits a data packet to the relay station 1420, which in turn forwards the data packet to the receiver 1410.

Fig. 14c shows another communication concept involving a relay station 1420, a transmitter 1400 and a receiver 1410.

The difference between the concepts illustrated in the Figs. 14b and 14c is that the receiver 1410 in Fig. 14c receives a direct transmission from the transmitter 1400 and a relayed version of the transmitted signal from the relay station 1420. Since in Fig. 14c the receiver 1410 receives two versions of the same transmission, one from the receiver 1400 and one from the relay station 1420, a diversity gain can be obtained. The transmitter 1400 and the relay station 1420 in Fig. 14c act as a virtual antenna array. This enables them to obtain higher data rates and diversity than they could have obtained individually. Similar concepts are described in A. Sendonaris, E. Erkip, and B. Aazhang, "User cooperation diversity-Part I: System Description", IEEE Trans. Commun., vol.51, no.11, pp.1927-1938, November 2003, A. Sendonaris, E. Erkip, and B. Aazhang, "User cooperation diversity- Part II: Implementation aspects and performance analysis", IEEE Transaction on Communications, vol.51, no.11, pp.1939-1948, November 2003, J. N. Laneman and G. W. Wornell, "Energy-efficient antenna sharing and relaying for wireless networks", in Proc. IEEE Wireless Communications and Networking Conference (WCNC), September 2000, pp. 7-12.

The practical application of the concept of cooperative networks on for example WLAN systems has a great potential for improving the overall performance of the network as terminals equipped with a single antenna can cooperate with other peer terminals in order to provide space-time diversity similar to multiple-input-multiple-output (MIMO) systems. The transmission concepts known from the state of the art have the problem that proper relay stations cannot efficiently be identified in a mobile environment, and so the benefits of the virtual antenna arrays or MIMO transmissions cannot be exploited.

For instance, from the IEEE 802.11-based mechanism a two-way and a four-way frame exchange is known as part of the prior art. In the two-way frame exchange, the successful decoding and reception of any single data frame is confirmed via an acknowledgement (ACK) control frame sent back by the receiver to the transmitter. If the transmitter does not receive any ACK-frame it will retransmit the data frame after a period of time defined by the sum of a distributed-coordination-function inter-frame space (DIFS = Distributed-coordination-function inter-frame space) and a random back-off period in the range of another time interval, which is often referenced with Time_Slot x [0, CW], where Time_Slot denotes the duration of a time slot in the physical layer, CW the contention window in the range of [CWmin, CWmax], where CWmin defines the minimum contention window and CWmax the maximum contention window as specified in the protocol IEEE 802.11. The parameter CW starts with a value CWmin and is doubled every time a packet is retransmitted, causing a high delay especially when multiple retransmissions are required.

The second transmission mechanism is a four-way frame exchange that uses the same data-acknowledgement frame exchange as described above and additionally precedes it with a two-way frame exchange that contains a request to send (RTS = request to send) frame and a subsequent clear to send (CTS = clear to send) frame. The RTS-CTS frame exchange aims at coping with the hidden node problem, which refers to the interference caused in the receiver by the transmission of a third node for which the transmitter is out of its channel-sensing range.

As previously described, the non-reception of an ACK-frame after the transmission of a data frame is always interpreted as a failed transmission, and thus it is followed by the retransmission of the same data frame. There are two reasons for the non-reception of an ACK frame:

- A detected error in the data packet, e.g., through the computation of a cyclic redundancy check (CRC = cyclic redundancy check) at the receiver. This error may be caused by two reasons, the first of which are bit errors produced by poor channel conditions between the transmitter and the receiver, and the second occurs because of a collision produced by two or more terminals that intend to transmit their frames at the same time.

- A detected error in the ACK frame sent by the receiver e.g. through the computation of the CRC at the original transmitter. This incorrect reception of an ACK frame is usually due to bit errors produced by poor channel conditions but could also be produced by a packet collision.

Regardless of the reasons behind the non-reception of an ACK frame, the original data frame is retransmitted. Generally, terminals located far from the AP tend to have poorer channel conditions and thus operate at lower data rates than terminals located closer to the AP. Furthermore, terminals located at a larger distance from the AP have a higher probability of becoming a hidden node for other terminals in the same cell. For these reasons, in general retransmissions by terminals with low data rates are much more undesirable than retransmissions by terminals with high data rates. The prior art concepts have the disadvantage that especially the terminals with low data rates need a higher number of retransmissions, due to their poorer channel conditions. Therewith, the overall system performance or the cell performance in terms of cell capacity or system capacity is degraded.

In S. Shankar, C. Chou and M. Ghosh, "Cooperative Communication MAC (CMAC) - A New MAC Protocol for Next Generation Wireless LANs", in Proc. of the IEEE International Conference on Wireless Networks, Communications and Mobile Computing 2005, the authors provide a new approach of alleviating the problem of a poor medium access control (MAC = medium access control) from a centric perspective. They propose a new MAC protocol, called cooperative MAC (CMAC), which enhances the existing IEEE 802.11 wireless local area network MAC protocol by introducing spatial diversity which is provided via user cooperation. In this scheme, partner terminals retransmit frames sent by other terminals that have not received acknowledgements by the AP. The frames to be retransmitted are stored in a special queue with higher channel-access priority based on the mechanisms defined by the IEEE 802.11e specifications. In this work neither the method of partner selection nor the forward-error-correction capability have been considered. Furthermore, the scheme has been defined only for the uplink channel, i.e. for transmissions from a terminal to the access point. However, the downlink, i.e. the transmission direction from the access point to a terminal, still has the known disadvantages. As generally there is much more downlink traffic this may become a great disadvantage.

The authors further provide a MAC variant that comprises a forward error correction (FEC = forward error correction) scheme to improve the reliability of over a wireless channel, the so-called FCMAC (FCMAC = FEC CMAC). Static and adaptable FEC algorithms can improve or degrade the performance of the wireless network if their overheads are not matched properly to the underlying channel errors, especially when the path loss fluctuates widely. The proposed scheme is based on the cooperative communication MAC as described above and introduces a cooperative forward error correction scheme. The data frames are divided into a number of Reed Solomon coded-data blocks which are independently transmitted by a number of partners so that each partner handles only one of the coded data blocks. The mechanism of partner selection has not been defined and again the proposed scheme is only applicable to the uplink channel. The downlink channel, i.e., the transmission from an access point to a terminal, still has the known disadvantages.

In P. Liu, Z. Tao and S. Panwar, "A Cooperative MAC Protocol for Wireless Local Area Networks", in Proc. Of IEEE International Conference on Communications 2005, the authors present a concept of user cooperation in wireless networks in order to improve the performance of for example IEEE 802.11 medium access control protocols. The new MAC protocol leverages the multi-rate capability of IEEE 802.11b and allows the mobile stations far away from an access point to transmit at higher rates by using intermediate stations as relay stations. Two variations of the new MAC protocol are outlined, both of which are able to increase the throughput of the whole network and reduce the average packet delay.

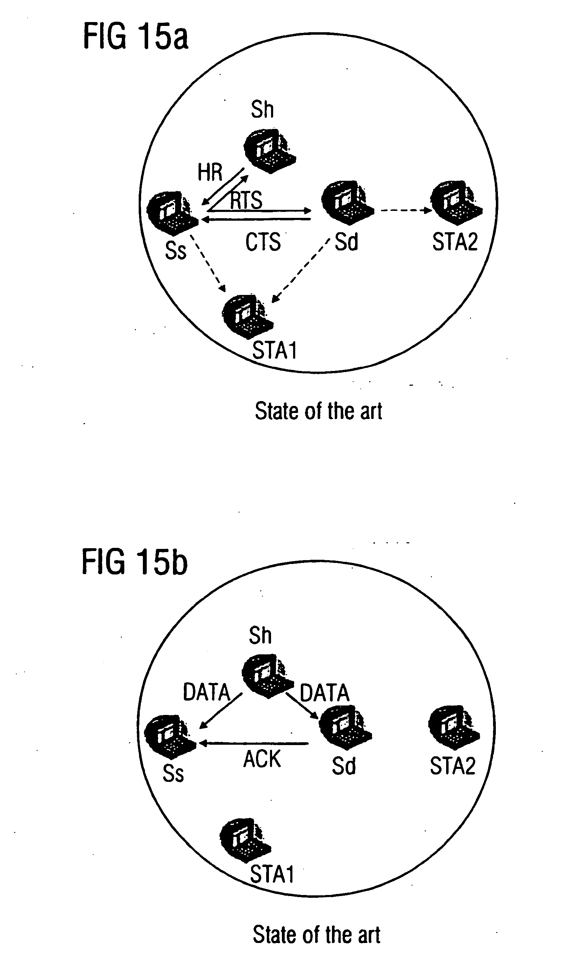

The figures 15a and 15b illustrate the proposed method. Figs. 15a and 15b show a transmitter $S_s$ seeking to transmit data packets to a receiver $S_d$. In between, there is a relay station $S_h$, which, according to the proposed scheme, can help the transmitter $S_s$ to transmit the data packet to the receiver $S_d$. Figs. 15a and 15b further show two other terminals STA1 and STA2, which participate in the channel contention. According to the four-way frame exchange scheme as described above, the transmitter $S_s$ would transmit a RTS packet, which would be received by the transmitter $S_d$ and the relay station $S_h$. The relay station $S_h$ can then indicate to the transmitter $S_s$ that the path via the relay station $S_h$ provides a better data rate than the direct path to the receiver $S_d$, by sending a helper ready (HR) packet to the transmitter $S_s$. According to Fig. 15b, the transmitter $S_s$ then transmits the data to the relay station $S_h$ first, upon which the relay station $S_h$ forwards the data to the receiver $S_d$. The receiver $S_d$ then acknowledges the successful reception of the data toward the transmitter $S_s$ by sending an ACK-frame. The concept described in this paper has the disadvantage that there is only one transmission path and no diversity gain can be provided to the receiver.

The scheme provides stations in a wireless network with a method to choose between either sending a frame directly to the destination or sending it using a relay node. The criteria to choose the best path is the total transmission time to the destination, which is available through the measurement of relative channel conditions between the involved nodes. The mechanism defined in this paper is focused on choosing the best path for transmissions in a multi-hop network. It has the disadvantage that neither the retransmission mechanisms nor the use of forward error correction cooperation is considered. Furthermore, the proposed method has the disadvantage that through the HR packets, an additional overhead in the network is introduced, for which valuable transmission resources are required.

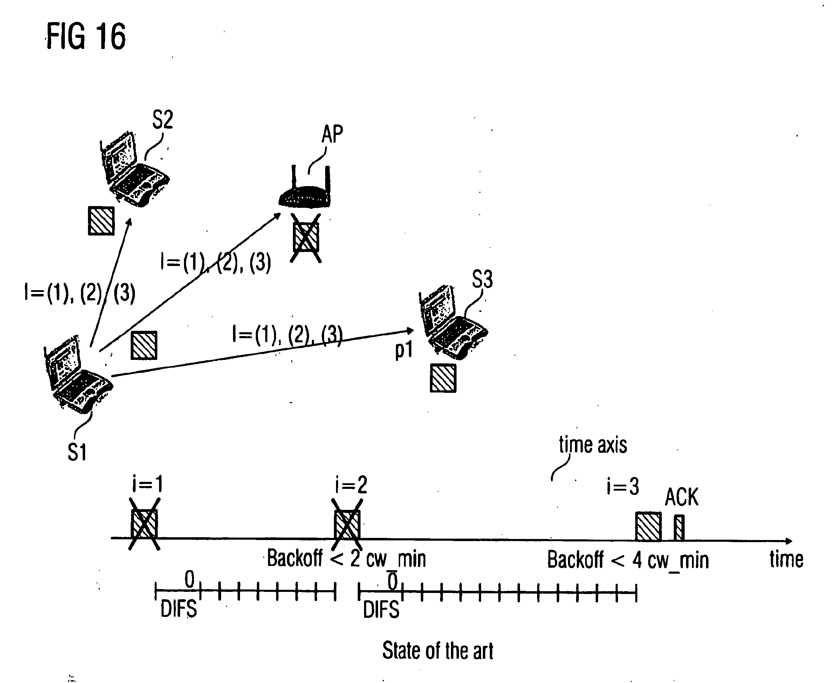

Fig. 16 illustrates the state of the art transmission as implemented in the conventional IEEE 802.11 standards, i.e. the prior art wireless LAN. Fig. 16 shows an access point AP, three terminals S1, S2, and S3, as well as a time axis. The terminal S1 tries to transmit a data packet to the access point AP at the time i=1. This is also indicated on the time axis at time i=1. The first transmission from the terminal S1 to the access point AP fails, and thus the data packet is not received by the access point. However, the packet is successfully received by the two other terminals S2 and S3 that are overhearing the channel. At the receiver, i.e. at the access point AP, a frame check sequence (FCS = frame check sequence) is considered, i.e., a check sum over a received packet is evaluated. If the check sum indicates that a packet was not received successfully, the data packet is discarded or dropped. As indicated on the time axis after the first transmission of the data packet, the terminal S1 waits for a time which is called distributed-coordination-function inter-frame space (DIFS ), after which a backoff period occurs according to the contention window mechanism. At the next transmission time, i=2, the terminal S1 carries out a first retransmission of the same data packet. As in the initial transmission, the data packet is not received successfully at the access point AP, upon which the terminal S1 again waits one direct inter-frame space and draws a new random backoff period, where the range of the contention window is doubled for the second retransmission. Whenever the terminal S1 does not receive an acknowledgement frame, a retransmission is carried out. All retransmissions have the same risk of packet loss.

This prior art concept therefore has the problem that the communication links are not exploited efficiently. In the considered example the terminals S2 and S3, which are in "promiscuous mode overhearing the channel", receive the first two transmissions successfully, however, the packets are discarded.

In the example depicted in Fig. 16, the terminal S1 manages to transmit the data packet successfully at the third try, i=3, which is also indicated on the time axis. Thus, after the third transmission of the data packet an acknowledgement frame is received from the access point AP. The example shall point out that the prior art concept does not make use of the radio resources efficiently. Reasons for the frame check sequence not being computed successfully at the access point AP are for example poor channel conditions, i.e. bit errors are produced, or packet collisions produced by two or more terminals transmitting at the same time. Another point of failure is the computation of the frame check sequence of the acknowledgement at the terminal S1, which can also fail owing to poor channel conditions and produced bit errors, or owing to colliding transmissions. As indicated in the example depicted in Fig. 16, whenever a transmission is not successful, the contention window is doubled and a random backoff period is calculated.

In "Cooperative Regions and Partner Choice in Coded Cooperative Systems", IEEE transactions on communications, vol. 54, no. 7, July 2006, Z. Lin, E. Erkip and A. Stefanov illuminate user cooperation as an efficient approach to obtain diversity in both centralized and distributed wireless networks. They consider a coded cooperative system under quasi-static Rayleigh fading conditions and investigate the partner-choice or partner selection problem. They find conditions on the interuser and user-to-destination channel qualities for cooperation to be beneficial. Using frame-error rate as a metric, they define a user cooperation gain (G) for evaluating the relative performance improvement of cooperative over direct transmission when a particular channel code is used.

They introduce a cooperation decision parameter (CDP), which is a function of user-to-destination average received signal-to-noise ratios (SNRs), and it is demonstrated that whether cooperation is useful or not ($G>1$ or $G<1$) depends only on the CDP, not the interuser link quality. They use an analytical formulation of the CDP to investigate user cooperation gain and provide insights on how a user can choose among possible partners to maximize cooperation gain. They first consider the asymptotic performance when one or both partners have high average received SNR at the destination. They then provide conditions on user and destination locations for cooperation to be beneficial for arbitrary SNRs. They illustrate these cooperative regions, and study geometric conditions for the best partner choice. They also define the system cooperation gain and illustrate cooperation benefits for both users. The theoretical results are verified through numerical examples.

In "Energy-Efficient Cooperative Relaying over Fading Channels with Simple Relay Selection" by R. Madan, N. B. Mehta, A. F. Molisch, and J. Zhang consider a cooperative wireless network where the source broadcasts data to relays, some or all of which cooperatively beamform to forward the data to the destination. The network is subject to an overall outage constraint. They generalize the standard approaches for cooperative communications in two respects: (i) they explicitly model and factor in the cost of acquiring channel state information (CSI), and (ii) they consider more general, yet simple, selection rules for the relays and compute the optimal one among them. These rules include as special cases several relay selection criteria proposed in the literature. They present analytical results for the homogeneous case, where the links have identical mean channel gains. For this case, we show that the optimal transmission scheme is simple and can be computed efficiently. Numerical results show that while the cost of training and feedback of CSI is significant, relay cooperation is still beneficial.

Further related state of the art documents are

- "Multiuser Detection for Cooperative Networks and Performance Analysis", L. Venturino, X. Wang, and M.Lops, IEEE transactions on signal processing, vol. 54, no. 9, September 2006,

- "A Simple Distributed Method for Relay Selection in Cooperative Diversity Wireless Networks, based on Reciprocity and Channel Measurement", A. Bletsas, A. Lippman, and D. P. Reed,

- "Grouping and Partner Selection in Cooperative Wireless Networks" by A. Nosratinia and T. E. Hunter,

- "Cooperative Source and Channel Coding for Wireless Video Transmission", Y. Wang, E. Erkip and H. Y. Mok, Polytechnic University, Brooklyn, New York, http://vision.poly.edu:8080/~hoiyin/project1.htm T. Korakis et. al., "Implementing a cooperative MAC Protocol for wireless LANs", IEEE ICC 2006 Proceedings, vol. 10, June 2006 discloses simulation results of a cooperative MAC protocol. The MAC protocol as proposed in P. Liu et. al. "A cooperative MAC Protocol for wireless local area Networks", Proceedings of IEEE INTERNATIONAL CONFERENCE ON COMMUNICATIONS 2005, is investigated. In wireless LANs that provide multi rate support, stations that experience poor channel quality tend to use a low transmission rate to reduce the bit error rate of each transmission. This phenomena usually leads to a throughput fairness problem between stations with good channel quality and those without. This fairness problem has been shown to result in throughput degradation for the whole network. The cooperative MAC protocol enables low rate stations being assisted by high rate stations, referred to as helper stations in its transmissions. With such assistance, the low rate station can transmit data at a higher rate in a two hop manner using the helper station. The authors describe the assumptions, the implementation process and the challenges associated therewith.

US 2004/0266339 A1 relates to wireless networks using cooperative relaying which, in a communication session, involves more than one relay station. In the method disclosed, a transmitter, a receiver and at least one relay station are engaged in a communication session. The relay station forwards signals from a first link between a transmitter and the relay station to a second link between the relay station and the receiver. The relay station forwards the signal with the use of a relative transmission parameter and optionally a common transmission parameter. The relative transmission parameter is determined locally in each relay station and based on a characterization of the first link, or the second link or a combination of the first and second links.

EP 1758268 A2 discloses a method and a base station for providing a network access service to terminals, where one of the terminals is selected as a source terminal and at least one of the other terminals is used as a relay node for relaying communication between the base station and the source terminal. Parameters for relay communication are initialized. A relay communication request message including said parameters is transmitted. In response to the message, a terminal independently sets and performs the relay communication between the base station and the source terminal. Up-link signals are received from the source and relay terminals. The up-link signals received from the source and relay terminals are combined and decoded. A transmitter throughput gain is obtained in up-link transmission of a terminal with a signal antenna because relay nodes retransmitted the source terminal's signal.

WO 2007/000742 A2 discloses a system, method and apparatus for a source to choose a partner/relay from at least one candidate to transmit at least part of a message from the source to a destination. The choice depends on the channel conditions of the source and when the source is experiencing poor channel quality to the destination, the source selects the candidate and the modulation modes of the source and partner/relay such that the frame error rate of the source is lowered. Otherwise, a modulation mode is selected for each of the source and the partner/relay that most improves the gain in throughput of the source. The method applies to modes consisting of binary phase shift keying, quadrature phase shift keying and 16-state quadrature amplitude modulation.

It is the object of the present invention to provide a more efficient concept for cooperative communication in wireless networks, which allows to exploit spatial diversity gains and forward error correction benefits.

The objective is achieved by a relay apparatus according to claim 1 and a method for relaying a data packet according to claim 24.

The present invention is based on the finding that coding and space diversity can be exploited in wireless networks in order to avoid retransmission by terminals with low data rates and hence the overall network efficiency or throughput can be increased. The inventive apparatus allows terminals with a better link to a partner transceiver or access point to retransmit coded versions of unsuccessfully decoded frames either sent or to be received by low data rate terminals. The quick retransmission of coded data frames originally transmitted over low data rate channels helps to reduce the average transmission time, thus increasing the overall throughput of the network and reducing the transmission delay, a key parameter for real-time applications utilized in for example WLAN systems. The cooperative scheme comprises terminals with high data rates and good channel conditions retransmitting packets in either their original shape or in shorter coded versions on behalf of terminals with low data rates and poor channel conditions.

The invention comprises methods to implement coded retransmissions in a WLAN based on IEEE 802.11. The selection of partners is done on-the-fly, in a distributed manner by the same terminals, through a comparison of relative channel quality-related parameters such as, for example, a signal to noise ratio (SNR), a data rate, a packet loss ratio, etc. among terminals and could also be controlled by channel access prioritization mechanisms such as the ones provided by IEEE 802.11e, for example provided in S. Mangold et al., IEEE 802.11e Wireless LAN for Quality of Service", Proceedings of European Wireless 2002. In one embodiment of the present invention, on-the-fly self-selection of coded-retransmission partners is based on the data rate of a source terminal or a first partner transceiver, which can be obtained by overhearing the data rate field of the physical layer convergence procedure (PLCP = physical layer convergence procedure) header defined in the IEEE 802.11 protocol.

In another embodiment of the present invention, the coded-retransmission partner selection can be based on traffic classes. The selection of coded-retransmission partners could then be done either separately per traffic class, i.e., between partners that for example carry out delay-sensitive services such as voice over IP (VoIP = voice over internet protocol), or it could be carried out by means of upgrading traffic classes dynamically depending on the previous number of retransmissions, or generally incorporating some other type of access prioritization mechanism for coded retransmitted data frames. Traffic classes are defined in the standard of IEEE 802.11e on quality of service extensions for IEEE 802.11. Along with the IEEE 802.11e traffic classes new traffic classes may be especially created for coded retransmitted packets such that, for example, in one embodiment, data frames are upgraded to higher access-priority classes every time they are retransmitted. Furthermore, the creation of new dynamic automatic repeat request (ARQ = automatic repeat request) mechanisms for the prioritization of retransmitted data frames can also be considered.

Embodiments of the present invention provide the advantage that the amount of traffic transmitted in for example a WLAN system can be reduced by making retransmissions more reliable. Furthermore, the inventive relay apparatus or the inventive method increases the overall throughput in for example a WLAN by reducing the amount of time spent in retransmissions. This is enabled, because high data rate stations are able to retransmit coded packets on behalf of low data rate stations. Moreover, the inventive approach creates a cooperative transmission system with MIMO-like features for terminals equipped with only a single antenna, respectively a virtual antenna array can be created. Embodiments of the present invention further provide the advantage that they define and specify a practical cooperative retransmission scheme for WLAN systems with optional modifications to the protocol IEEE 802.11. Furthermore, forward error correction coding can be implemented easily in embodiments of the present invention. Embodiments of the present invention provide significant benefits and advantages in both transmission directions in the uplink, i.e. when transmitting from a terminal to an access point, and also in the downlink, i.e. when transmitting from an access point to a terminal. The inventive approach enables partner selection on-the-fly without introducing signaling overhead to the network.

Embodiments of the present invention are detailed using the figures attached, in which:

| | |
|---|---|
| Fig. 1 | shows a block diagram of an embodiment of an inventive relay apparatus; |
| Fig. 2 | shows an example scenario where the inventive method can be utilized; |
| Fig. 3 | shows an example flowchart of an embodiment of the inventive relay apparatus for an uplink transmission; |
| Fig. 4 | shows a flowchart of an exemplified access point for an uplink transmission; |
| Fig. 5 | shows a flowchart of an exemplified transmitter for an uplink transmission; |

| | |
|---|---|
| Fig. 6 | shows an exemplified scenario for illustrating the inventive method for a downlink transmission; |
| Fig. 7 | shows a flowchart of an exemplified inventive relay apparatus for a downlink transmission; |
| Fig. 8 | shows a flowchart of an exemplified access point for a downlink transmission; |
| Fig. 9 | shows a flowchart of an exemplified receiver for a downlink transmission; |
| Fig. 10 | shows an exemplified scenario illustrating an embodiment of the inventive cooperative coding transmission; |
| Fig. 11 | shows a scenario illustrating an embodiment of the inventive cooperative coded retransmissions in an uplink channel; |
| Fig. 12 | shows a scenario illustrating an inventive method of cooperative coded retransmissions in a downlink channel; |
| Fig. 13 | shows a scenario illustrating the inventive method of multiple coded retransmissions; |
| Fig. 14a-c | illustrate the state of the art transmissions concepts; |
| Fig. 15a and 15b | illustrate two scenarios carrying out state of the art communication; |
| Fig. 16 | illustrates the WLAN state of the art communication. |


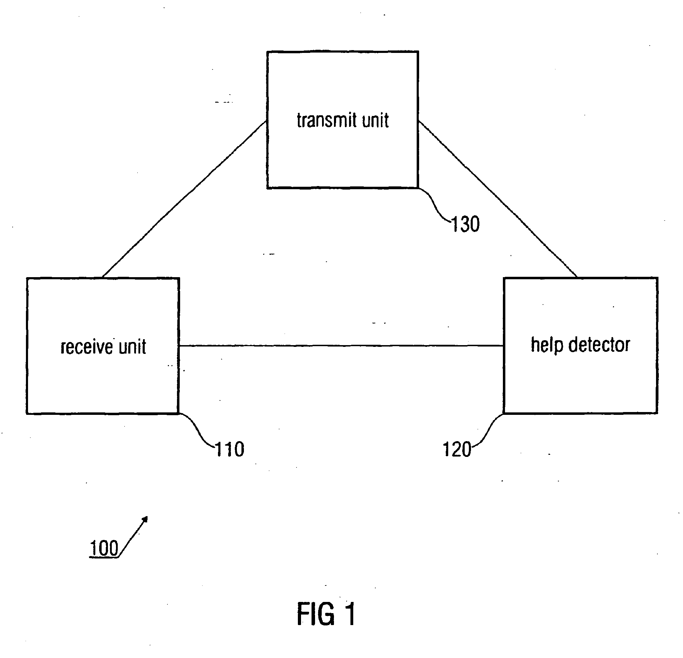

Fig. 1 shows a block diagram of an embodiment of the inventive relay apparatus 100. Fig. 1 shows a receive unit 110, a help detector 120, and a transmit unit 130. The relay apparatus 100 for relaying a data packet to be transmitted from a first partner transceiver to a second partner transceiver comprises the receive unit 110 for receiving the data packet and for receiving an acknowledgement packet to be transmitted from the second partner transceiver to the first partner transceiver when the second partner transceiver has successfully received the data packet.

In the following multiple embodiments of the present invention will be discussed. In an infrastructure scenario up-link and downlink transmission directions are distinguished. The inventive relay apparatus 100 receives a data packet, which is transmitted from a first partner transceiver to a second partner transceiver. Embodiments of the present invention refer e.g. to WLAN systems, where in the uplink a number of terminals or transmitters transmit signals to one access point or receiver. In this scenario the first partner transceiver would be a terminal trying to transmit a data packet to the access point, respectively to the second partner receiver. The inventive relay apparatus 100 can be integrated in a terminal or also in an access point, correspondingly in embodiments all terminals or access points may be inventive relay apparatuses 100. In the downlink the access point or transmitter transmits a data packet to a terminal or receiver, thus in this scenario the first partner transceiver is the access point and the second partner receiver refers to a terminal. Similar to what was mentioned above, the inventive relay apparatus may be integrated in any terminal or also in an access point.

The successful reception of the data packet can be detected by the second partner transceiver for example by evaluating a bit error ratio, a signal-to-noise-ratio, a frame check sequence, etc. There are various mechanisms conceivable for the second transceiver to detect whether a reception of a data packet was successful or not. Important for the inventive relay apparatus 100 is that the second transceiver has not acknowledged successful reception for the data packet.

Furthermore, the relay apparatus 100 comprises a help detector 120 for providing a help indicator if a help-required situation is detected; wherein the help required situation is detected based on whether a first communication link between the relay apparatus 100 and the second partner transceiver is better than a second communication link between the first and second partner transceivers, the second communication link being evaluated by an information being available from the data packet. The help required situation is closely tied to the second transceiver not confirming the successful reception by the acknowledgement packet. In embodiments of the present invention, such help-required situations can for example be created by the first transceiver trying to transmit the data packet to the second transceiver, which did not acknowledge successful reception. In one embodiment, the help detector 120 is adapted four further detecting the help required situation based on a timer expiry with the timer expiring if the acknowledgement packet is not received within a certain time interval after receptionof the data packet.

If the relay apparatus 100 experiences a better channel condition or communication link towards the first partner transceiver and towards the second partner transceiver than the channel condition in between the first partner transceiver

and the second partner transceiver, and if the relay apparatus 100 has successfully received the data packet, the relay apparatus can save valuable transmission resources by retransmitting the data packet or a coded version thereof for the first transceiver. The conditions of the communication channels between the relay apparatus 100, the first partner transceiver, and the second partner transceiver can be determined by various evaluation metrics. In one embodiment the communication links maybe evaluated by an information being explicitly available from the data packet, i.e. being contained in a control information part or header part of the data packet. In one embodiment referring to WLAN a data rate can be read from the header of a packet.

In one embodiment of the present invention, it is determined from the data packet itself, for example in a WLAN networking scenario, an evaluation metric can be determined from the physical layer convergence procedure header, corresponding to the data rate used.

Other embodiments may make use of evaluating the communication links by an information being implicitly available from the data packet, such as e.g. inferring a quality of a communication link by determining a data packet size, a transmission duration, a modulation scheme, or a bandwidth of the transmission.

The forwarding or transmission of the data packet in response to the help indicator is carried out by the transmit unit 130 comprised within the inventive relay apparatus 100.

As mentioned above, the relay apparatus 100, respectively the help detector 120, is adapted for evaluating the communication links between the relay apparatus 100 and the first and second partner transceivers, respectively the communication link in between the first and second partner transceivers based on one of or a combination of the group of a data rate, a signal-to-noise-ratio, a signal-to-noise-and-interference ratio, a packet loss ratio, a bit error rate, an average number of retransmissions or a traffic class. Based on this evaluation, partner transceivers are determined in another embodiment of the present invention, i.e. not all potential transceivers are partner transceivers. The selection of potential partner transceivers can, in one embodiment of the present invention, be based on an evaluation metric of a communication link as well. In one embodiment of the present invention, help indicators are only provided for data packets received from partner transceivers, where a partner transceiver fulfills the criterion of the first communication link between the relay apparatus 100 and the second partner transceiver being better than the second communication link between the first partner transceiver and the second partner transceiver. In one embodiment the first communication link can be evaluated by the data rate read from the received data packet. The second communication link may be evaluated by an own data rate or an own average data rate, which was used for a preceding transmission of a data packet, which was created locally at the relay apparatus 100. In one embodiment a help required situation is only detected if the own data rate or the own average data rate is higher than the data rate read from the received data packet. In other embodiment the evaluation of a third communication link between the first partner transceiver and the relay apparatus may be taken into account as well, when determining a help required situation. The third communication link may be especially evaluated if e.g. a help required situation is determined from an uplink transmission being also valid for a downlink transmission, i.e. an embodiment may establish a help required situation mutually between the two partner transceivers.

In yet another embodiment of the present invention, the inventive relay apparatus 100 only creates a help indicator, respectively forwards a received data packet, if it has another data packet for transmission available, which has not been received from another transceiver, but was created locally and scheduled for transmission. The transmit unit 130 is in this embodiment adapted for transmitting the data packet and the other data packet together, for example in a piggybacked manner. Moreover, the inventive relay apparatus 100 is adapted in embodiments of the present invention for discarding a received data packet if an acknowledgement packet is received from the second partner transceiver or if a certain discard time interval has elapsed after the data packet was received from the first partner transceiver. In another embodiment, the inventive relay apparatus 100 is adapted for repeating a transmission after a certain retransmission time has elapsed, respectively the transmit unit 130 can be adapted for carrying out the retransmissions accordingly.

Inclusion of a retransmission indicator, for example in terms of a bit or a flag, is comprised in other embodiments of the present invention. In these embodiments the forwarded data packet is flagged by the inventive relay apparatus 100 in order to create an indication to other transceivers that the transmission is already a cooperative retransmission. In another embodiment of the present invention, the flag is replaced by a counter or an identification in order to enable a certain relaying path, possibly being composed of a number of inventive relaying apparatuses. The counter could be limited in order to limit the length of the relaying or multi-hop path. Furthermore, in yet another embodiment of the present invention, the inventive relay apparatus 100 is adapted for receiving a multi-acknowledgement or combined-acknowledgement packet, in which multiple data packets or a data packet and another data packet are acknowledged at the same time, where the data packet can be a relayed packet and the other data packet could be a locally created packet.

In yet another embodiment of the present invention, the inventive relay apparatus 100 is adapted for transcoding the received data packet. This embodiment carries out forward error-correction coding, where the relay apparatus 100 could for example only forward parity bits or a transcoded version of the data packet. In one embodiment, chase combining, when retransmitting the original data packet, or incremental redundancy combining is enabled at the second partner transceiver when a transcoded version of the original data packet is provided. In another embodiment, the transcoding is adapted to the channel quality or the quality of the communication link between the relay apparatus 100 and the second partner transceiver.
One embodiment may be in a WLAN scenario where a first terminal having a good communication link to an access point carries out a voice session, therefore only does short high rate transmissions. A second terminal having a poorer communication link tries to transmit video packets from a video call to the access point as well, however at a lower rate utilizing longer transmissions. In the case where the first terminal receives the video packets from the second terminal correctly but the access point fails, the first terminal can forward the packets received from the second terminal. The condition on the links in order to detect the help required situation is fulfilled, since the first terminal supports a higher data rate than the second terminal, which can e.g. be read from the packet header of the video data packets from by the first terminal. Embodiments provide the advantage of a higher system capacity and an extended coverage for certain services, which can be seen from the example above, where the second terminal may not be able to establish a video call at all without the first terminal acting as the inventive relay apparatus 100.

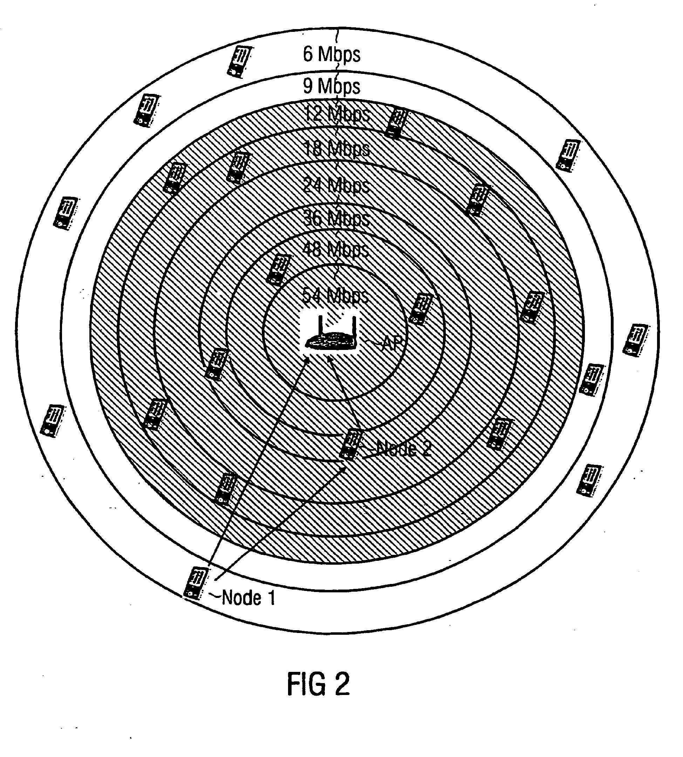

Fig. 2 shows an example scenario for detailing the inventive relay apparatus and the inventive methods. Fig. 2 shows an example of a generic IEEE 802.11a/g WLAN with its 8 respective data rate zones marked by the concentric circles labeled with different data rates reaching from 6 Mbps to 54 Mbps. A number of terminals are distributed across the region of coverage, of which only the one labeled node 1 and the one labeled node 2, as well as the access point AP in the center are considered in the following example. It is supposed that the data rates of terminals are relatively stable after a data rate tuning to adjust to their respective channel conditions has taken place. A terminal is considered to have a stable data rate D if, for example, the ratio of successful transmissions at the given data rate D during the last N transmitted data frames is greater than K %. For the remainder of the description of the invention, the term "stable data rate" will refer to a data rate that meets the above-specified requirement in any involved terminal. Thus in this example the access point acts as a second partner transceiver, node 1 refers to the first partner transceiver and node 2 refers to the relay apparatus.

According to the inventive method and the inventive relay apparatus, every terminal with a stable data rate equal or greater than DR_thr_up is allowed to retransmit data frames on behalf of a terminal with a lower data rate such that

$$DR_thr_up = \alpha \cdot DR_tx$$

where $\alpha > 1$, *DR _tx* denotes the data rate of the terminal with the lower data rate, and $DR_thr_up \leq Max_Data_Rate$. Thus, every terminal with a data rate within the range [*DR_thr_up, Max_Data_Rate*] can become a potential retransmitter or relay apparatus of the terminal whose transmission failed. In one embodiment of the present invention, the relation between the communication links is evaluated by the metric of data rates. For example, in case of IEEE 802.11a or g the parameter Max_Data_Rate is set to 54 Mbps.

*DR_tx* is for instance obtained by overhearing the physical layer convergence procedure (PLCP) header of data frames transmitted by other terminals to the access point AP, i.e.. in this embodiment of the present invention, the information on the metric of the communication links is contained in the data packet itself. The PLCP is always transmitted at the minimum data rate supported by the physical layer, for example 6 Mbps in case of IEEE 802.11a or g.

For the sake of clarity, it is supposed that in the example illustrated in Fig. 2, $\alpha = 2$ is chosen and a data frame transmitted at 6 Mbps from node 1 to the AP cannot be successfully decoded by the access point AP. As the computation of for example the cyclic redundancy check (CRC) on the access point AP is not successful, the access point AP does not send an acknowledgement frame and keeps during a period of time, for example called T_ap, which is an implementation issue but should be basically defined by the number of allowed coded retransmissions M that will be addressed later in this description, the unsuccessfully decoded data frame in a special buffer waiting for either a normal retransmission from node 1, or a FEC-coded (FEC = forward error correction) retransmission of the frame from a relay node or relay apparatus in order to decode the data frame successfully. This is a major difference with a conventional system like 802.11 where packets not decoded successfully are immediately dropped at the receiver. All terminals that overheard the data frame sent by node 1 and that meet the following three conditions may create a coded version of the data frame sent by node 1 and act as a relay apparatus:

- To have a stable data rate equal or greater than DR_thr_up = 12 Mbps, where $\alpha = 2$

- To have at least one packet waiting to be transmitted in their buffers, which is an optional condition. This condition is not strictly necessary since the terminal with no packets to transmit can add a successfully decoded packet sent by other terminals to its own transmission buffer and thus participate in the channel contention defined in 802.11. The selection of either alternative is an implementation issue but the piggybacking option is more efficient in terms of bandwidth usage.

- To have overheard and successfully computed the CRC of the packet transmitted by node 1.

If one of the terminals that met the conditions mentioned above does not hear an acknowledgement frame sent by the access point AP to node 1 and happens to access the channel through the common CSMA/CA (CSMA/CA = Channel Sensing Multiple-Access / Collision Avoidance) mechanism before node 1, it piggybacks the FEC-coded data frame sent by node 1 to its own data frame before transmitting it to the access point AP. Note that the three conditions above define the requirements for the help detector comprised in the inventive relay apparatus to create a help indication in this embodiment. It is supposed that node 2 in Fig. 2 meets the three previous requirements and grabs the channel after node 1's failed transmission, i.e. no acknowledgement frame was sent by the access point AP to node 1. Node 2 will piggyback to its own data frame the FEC-coded frame previously transmitted by node 1 and then transmit the two-in-one data frame to the access point AP. If the access point AP can decode the packet successfully, it sends two successive acknowledgement frames, one for node 1 and one for node 2.

Alternatively, it can send a multi-acknowledgement frame confirming the successful CRC computation of both node 2's data frame and node 1's data frame. In this new type of multi-acknowledgement frame, wherein the MAC headers of both acknowledged data frames, i.e. for node 1 and for node 2, are included, a change in the IEEE 802.11 receive behavior would be required, since with 802.11 only a single MAC destination address field exists and a node discards all frames not addressed to itself. All partner nodes or partner transceivers that have previously stored a coded version of the data frame sent by node 1 and node 2 must remove these data frames from the special buffer upon overhearing the acknowledgement frame or if a buffering time of for example T_buffer elapsed. In case that node 1 does receive an acknowledgement frame from the access point AP but some of its relay nodes that have previously stored node 1's data frame do not, the relay nodes will intend to retransmit a coded version of node 1's data frame. The access point AP has to reply to each of these not needed retransmissions of node 1's data frame by sending an acknowledgement frame to node 1. As an optional optimization the acknowledgement frame may include the sequence control field of the corresponding data frame of node 1 in order to avoid the duplication of acknowledgement frames caused by other retransmitter partners that may have not overheard an already successfully transmitted acknowledgement frame to node 1, the optional extensions to the existing IEEE 802.11 protocols will be summarized below.

In general, any systematic coding technique that allows sending only the parity bits can be used in the proposed scheme. Thus, Reed-Solomon codes, cf. for example Bernard Sklar, "Digital Communications", Prentice Hall International, 2001", or systematic rate compatible punctured turbo codes (RCPT = Rate Compatible Punctured Turbo Codes) may be used, cf. D. N. Rowitch and L. B. Milstein, "On the performance of hybrid FEC/ARQ systems using rate compatible punctured turbo (RCPT) codes", IEEE Trans. On Comm., vol. 48, pages 948-959, June 2000. One possibility is to have the relay terminal choose the error correction capability of the particular mode, i.e. the code rate, based on a ratio of successful transmissions over a total number of transmissions associated with the current transmitter during the last for example T_past_up seconds. The ratio of successful transmissions can be either obtained directly from the transmitter node through a special field defined in the data frame header, or calculated locally at any terminal located in the transmission range of the transmitter node, such that it can overhear data frames sent by the transmitter and the respective acknowledgement frames. Thus, every possible relay terminal will have a table of error correction capability versus ratio of successful transmissions for any given transmitter terminal it has overheard during the last T_past_up seconds.

Such table can be either previously configured, i.e. fixed or dynamic. The following table shows an example for a fixed pre-configured table in case of using Reed-Solomon codes for the parity bits to be transmitted. No transmission from a neighbor terminal is stored in the table when no transmission was detected during the last $T_0$ seconds, where $T_0 \leq$ T_past_up, respectively its associated entry is deleted from the table.

Table. Example of dynamic error-correction capability selection

| *Neighbor terminal's MAC address* | *Ratio of Successful Transmissions during last T seconds* | *(Total Symbols, Data Symbols, bits per symbol) → Parity Symbols to be Transmitted* |
|---|---|---|
| *A4:FE:OP:67:B8:CD* | *[0 → 33]%* | *(256, 224, m - 8) → 32* |
| | *[33 → 66]%* | *(128, 112, m = 7) → 16* |
| | *[66 →100]%* | *(64, 56, m - 6) → 8* |
| *C7:HJ:LK:79:B0:S3* | *[0 → 33]%* | *(256, 224, m - 8) → 32* |
| | *[33 → 66] %* | *(128, 112, m = 7) → 16* |
| | *[66 →100] %* | *(64, 56, m - 6) → 8* |

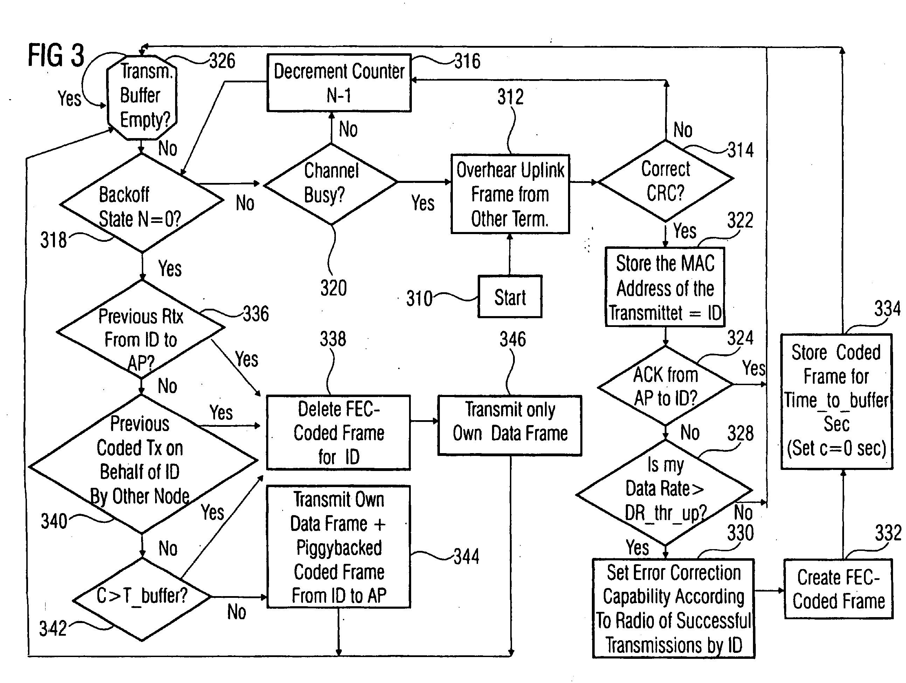

The following figures 3, 4, and 5 show exemplified flowcharts corresponding to a relay terminal as one embodiment of the present invention and the corresponding involved access point (second partner transceiver) as well as a transmitting first partner transceiver respectively considering an uplink transmission.

Fig. 3 shows an exemplified flow chart of an embodiment of an inventive relay apparatus. The flow chart starts with a step 310 followed by a step 312, in which the relay apparatus overhears uplink frames from other terminals. Following the step of overhearing uplink frames from other terminals, the relay apparatus detects whether an uplink frame from another terminal was overheard correctly, e.g. by evaluating a CRC in a step 314. if the CRC was not correct, a counter N modeling the number of remaining time slots in the back-off state is decreased in a step 316, upon which the back-off state is checked in a step 318. If the back-off state N has not reached a trigger yet, where in step 3118 the trigger is exemplified as N=0, the relay apparatus checks whether the channel is busy or not in a step 320. If the channel is busy, the relay apparatus follows with step 312, and tries to overhear an uplink frame from another terminal using the channel. If the channel is not busy, the relay apparatus loops to step 316 in order to decrement the counter and eventually reach the end of the back-off state.

If the relay apparatus manages to overhear an uplink frame from another terminal with a correct CRC then it stores the MAC address of the transmitter in a step 322. According to the inventive method the relay apparatus then tries to overhear the acknowledgement from the access point to the specific transmitter in a step 324. If an according acknowledgement frame is overheard from the access point the relay apparatus follows with step 326, in which it checks whether the transmission buffer is empty or not. If the acknowledgement frame from the access point is not received a verification in step 328 is done by the relay apparatus, whether the corresponding transmitter is a partner transceiver or not. This is exemplified in step 328 by checking whether the data rate towards the access point of the relay apparatus is higher than the data rate of the respective transmitter to the access point. If this requirement is not fulfilled, the relay apparatus continues with state 326, in which the transmission buffer status is monitored. If the requirement is fulfilled, then the error correction capability is set according to the ratio of successful transmissions by the respective transmitter in a step 330, followed by a step of creation of the FEC-coded frame in step 332, and a step for storing the coded frame for a certain time in a step 334, where the time is called Time_to_buffer in step 334. Step 334 is then followed by step 326, in which the transmission buffer is monitored.

In step 326, the transmission buffer is monitored and the relay apparatus stays in this state for as long as the transmission buffer is empty. If there is data available in the transmission buffer, step 326 is followed by step 318, in which the back-off timer or the back-off state N is verified. Once the end of the back-off state is reached in step 318, i.e. the exemplified variable N has reached the value of 0, the relay apparatus checks in a step 336 whether a previous retransmission from the respective transmitter to the access point has been carried out. If a retransmission by the respective transmitter has happened, the relay apparatus follows with the step 338, in which the FEC-coded frame is deleted. If no retransmission has occurred from the respective transmitter to the access point, the relay apparatus checks whether there has been a previous coded transmission on behalf of the respective transmitter by any other node or relay apparatus in step 340. If another node has already transmitted a coded version on behalf of the respective transmitter, the relay apparatus moves on to step 338, in which the FEC-coded frame for the respective transmitter is deleted. If no previous coded transmission has happened, the relay apparatus checks whether the limit time T_Buffer has been exceeded or not in a step 342. If the time T_Buffer has already elapsed the relay apparatus moves on to step 338, in which the FEC-coded frame is deleted. If the T_Buffer has not elapsed yet the relay apparatus follows in a step 344, where it transmits its own data frame plus a piggybacked coded frame for the respective transmitter. If the relay apparatus happened to delete the FEC-coded frame in step 338, it would follow with the transmission of only its own data frame in step 346 and following the transmission either in step 346 or the transmission in step 344, it would revert to the state of 326, where the transmission buffer is monitored.

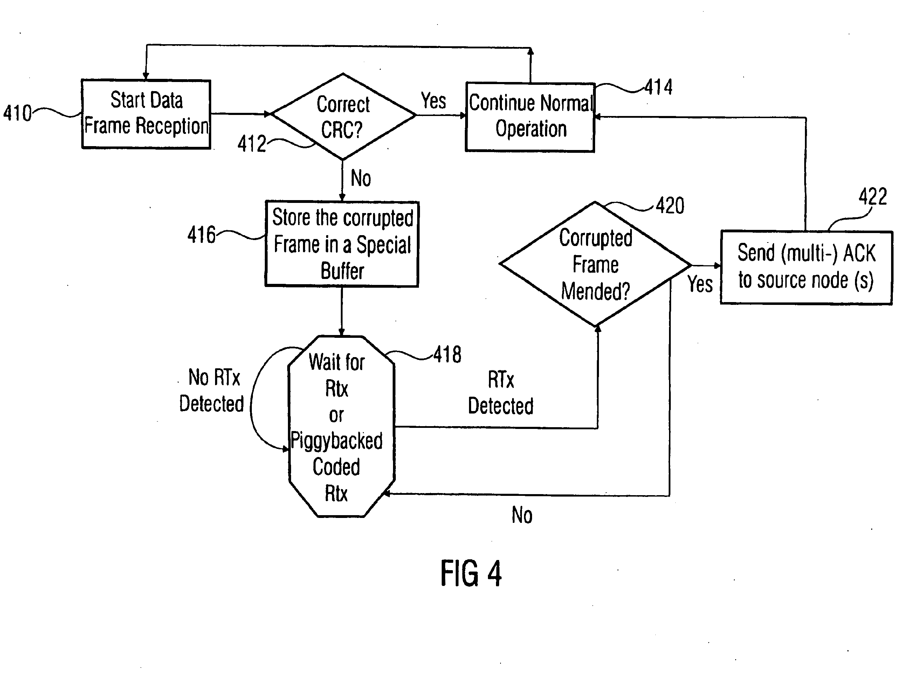

Fig. 4 shows a respective flowchart for an exemplified access point (second partner transceiver) behavior during up-link transmission. The access point would start a data frame reception in a step 410, upon which it would try to compute a correct CRC in a step 412. If the access point manages to compute the correct CRC in step 412, it continues with step 414, which is the normal operation, including sending a normal acknowledgement frame to the transmitter of the data frame. From step 414, the access point reverts to state 410 in which it starts to receive a next data frame. If in step 412 the access point was not able to compute a correct CRC, it stores the corrupted frame in a special buffer in step 416, upon which it changes states to step 418, in which it waits for either a retransmission or a piggybacked coded retransmission. For as long as no retransmission or piggybacked coded retransmission is detected, the access point stays in state 418. If a retransmission or a piggybacked coded retransmission is detected, the access point moves on to step 420, in which it tries to mend the corrupted frame, and if it succeeds, it moves on to step 422, in which it sends an acknowledgement frame to the source node, respectively, it could also send a multiple ACK frame to the source nodes. From step 422 the access point AP continues in step 414 with normal operation. If in step 420, the access point did not manage to mend the corrupted frame, it returns to state 418, in which it waits for the next retransmission, respectively the next piggybacked coded retransmission.

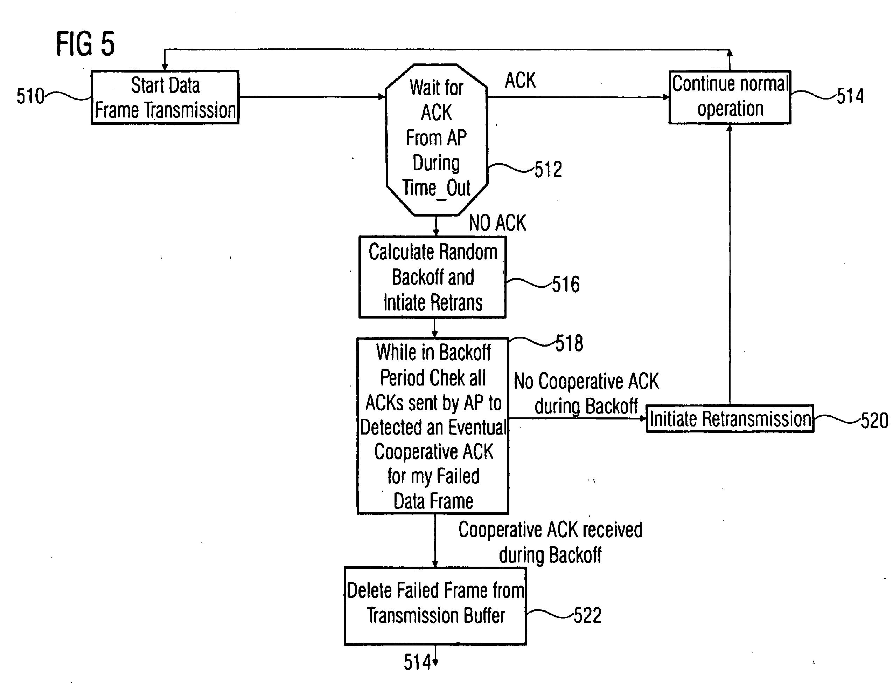

Fig. 5 shows a flowchart for a corresponding transmitter, i.e. a first partner transceiver during uplink transmission.

The transmitter starts in a step 510 by transmitting a data frame. Following the step 510, the transmitter moves on to step 512, in which it waits for an acknowledgement frame from the access point for a certain time, which is referred to as Time_Out in step 512. If a corresponding acknowledgement frame is received the transmitter moves on to step 514, i.e. it continues with normal operation and reverts from step 514 back to step 510, where the next data frame is transmitted.

If the Time_Out has elapsed without reception of an acknowledgement frame, the transmitter moves on to step 516, in which a random back-off time is calculated and a retransmission is initiated. After calculation of the random back-off time in step 516, the transmitter moves on to step 518, in which it waits for the back-off period and checks all acknowledgement frames sent by the access point to detect an eventual cooperative acknowledgement for the failed data frame, since potentially, a relay node or apparatus could forward the lost data frame. If the back-off period elapses without reception of a cooperative acknowledgement frame, a retransmission is initiated in step 520, and the transmitter continues with the normal operation in 514. If in step 518, a cooperative acknowledgement frame is received during the back-off period, the respective frame is deleted from the transmission buffer in step 522, and the transmitter continues with normal operation in 514.

If there is no acknowledgement frame from the access point (second partner transceiver) for a data frame coded and retransmitted by a cooperative terminal, i.e. a relay apparatus, received, another relay node that overheard the transmitted two-in-one data frame can retransmit and thus provide a coded data packet for the complete two-in-one frame, including the first data packet. This is possible, if such node accesses the channel first in the contention and for as long as a so-called retransmission flag of the data frame is set to 1, allowing a second retransmission. Without the optional retransmission flag coded retransmissions are only used to repair a single original packet transmission in one embodiment of the present invention. If it is assumed that in Fig. 2, node 1 transmits a packet to the access point AP without success, node 2, after noticing the lack of the acknowledgement frame for node 1, piggybacks the coded frame of node 1 to its own data frame and sends a two-in-one data frame to the access point AP. If it is supposed that this transmission is also unsuccessful because of either a bad channel condition or a packet collision, a third node with the data rate at least as high as the data rate of node 2, which has a packet in its transmission buffer and has successfully overheard the two-in-one packet transmitted by node 2 can piggyback coded data for the two-in-one frame and send a three-in-one frame, acting as a relaying apparatus relaying the already relayed data packet.

To this end, it coded the uncoded part of the packet, i.e. the data of node 2, and keeps the coded part of the packet, i.e. the coded data of node 1 as it is. The reason for the third node not to code again the coded packet sent by node 1, is the coding weakness that could result from the receding of the same coded packet. It then piggybacks the two coded data frames to the first data frame in its transmission buffer creating a three-in-one data frame that will contain its own data, the coded version of the packet sent by node 1, and the coded version of the packet sent by node 2. Up to M coded packets that were not acknowledged can be combined and piggybacked. The parameter M has to be chosen so as to not exceed possible maximum packet size constraints and can be set by the network administrator or the manufacturer, or even by means of a dynamic mechanism. Upon successfully receiving a packet with multiple coded data frames and from other terminals, the access point AP must send multiple acknowledgement frames, i.e. one for each transmitter, respectively it could send a multi-acknowledgement frame, to confirm the successful reception of all data frames.

Once more, the requirement of having a data frame in a transmission buffer is not strictly necessary and thus a node that successfully overheard a failed FEC-piggybacked data frame and that does not have a data frame in its transmission buffer can store the two-in-one frame in its transmission buffer and participate in the channel contention as well. The selection of either alternative is an implementation issue.

The uplink transmission case is easier than the downlink one, since the receiver node is always the access point AP. In case of the downlink channel, however, the transmitter is always the access point, but the receiver node can be any terminal in the access point's coverage area associated with that access point. Thus, organizing nodes for retransmitting on behalf of others becomes a more difficult task, which however is also resolved by the inventive relay apparatus and relaying method.

In the downlink the access point is the first partner transceiver and transmits a data packet to a terminal, which acts as the second partner receiver, any terminal in between may act as relaying apparatus if certain criteria are fulfilled. For downlink channel retransmissions, each terminal can keep a small database with its neighbor nodes. The database is e.g. created by measuring the received signal-to-noise ratio of frames transmitted by other terminals and itself to the common access point during the last T_SNR_down seconds. The technique to measure the SNR could be the one defined by IEEE 802.11k on radio resource measurements, compare: IEEE 802.11k, "802.11k makes WLANs measure up", Network World magazine, http://www.networkworld.com/news/tech/2004/0329techupdate.html. If the received SNR is equal or greater than a certain threshold SNR_thr the identity of the transmitter terminal and its associated SNR are stored in the database. Entries of this database are deleted after a time Time_Out_database.

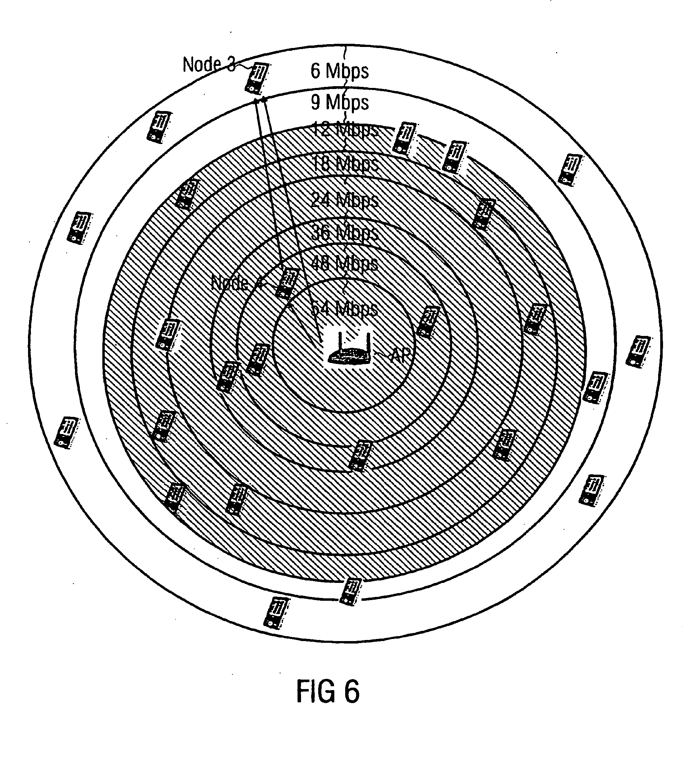

In case that a data packet transmitted by the access point AP to any terminal failed, i.e. no acknowledgement frame is sent back by the terminal to the access, point AP, one of the other terminals in the vicinity of the intended receiver that have successfully computed the CRC on the original packet sent by the access point AP can retransmit a coded version to the intended receiver, acting as relay apparatus, at a higher data rate than the access point AP as well. A similar exemplified scenario as it was described above is depicted in Fig. 6. Fig. 6 shows a scenario with an access point (first partner transceiver) in the center, transmitting- a data frame to a terminal node 3 (second partner transceiver) with the terminal node 4 (relay apparatus) in between. The example shown in Fig. 6 refers to a WLAN scenario, where the regions of different data rates are again shown as concentric circles with the corresponding labels showing the respective data rates. It is assumed that in Fig. 6 the access point AP sends a data frame to node 3, which cannot decode successfully. Node 3 stores the corrupted copy of the received data frame in a special buffer. Other terminals in the vicinity of node 3 have successfully decoded a data frame sent by the access point AP and are able to resend a coded version of the data frame to node 3 as relaying nodes, e.g. node 4. The terminals that are able to resend a coded version of the data frame may meet three requirements:

- The average SNR with which node 3's past transmissions during the last Td seconds were received must be equal or greater than SNR_thr
- The stable data rate used to transmit or receive successfully a data frame to/from the access point AP must be equal or greater than DR_thr_down.
- There are one or more packets stored in the respective transmission buffers, which is optional.

The last condition is not strictly necessary since terminals with no packets to transmit can add a successfully decoded packet sent by the access point AP to their own transmission buffer and thus participate in a channel contention as any other terminal with packets to transmit. The selection of either alternative is an implementation issue. In case of not choosing the third alternative, i.e. no packets in the transmission buffer are necessary, the second requirement is not needed any more since the partner node has nothing to transmit to the access point AP and the key parameter becomes only the transmission data rate from the retransmitting partner node to the intended receiver node.

It is supposed that in Fig. 6 node 4 meets the three requirements mentioned above. If node 4 gains access to the channel after detecting that there was no acknowledgement frame from the node 3 to the access point AP, it will create a coded version of the data frame sent by the access point to node 3, according to a table similar to the table above, as it was described for uplink transmission, and node 4 would piggyback it to its own data frame. Finally, it will transmit the two-in-one data frame to both the access point AP and node 3. In case of a successful CRC computation of the two-in-one data frame, the access point AP sends an acknowledgement frame to node 4. As an option, the access point AP may also piggyback the acknowledgement frame to any data frame it has to transmit, wherewith it reduces the number of necessary transmissions. Node 3 has to first wait for the acknowledgement frame from the access point AP to node 4's data frame and in case of a successful reception of node 4's data frame after a short inter-frame space (SIFS = Short Inter-frame Space) period will transmit its own acknowledgement frame to the access point AP, optionally piggybacked to a data frame in its transmission buffer. Node 4 can delete the coded packet for node 3 upon overhearing the acknowledgement frame from node 3 to the access point AP or after a certain time, which could e.g. be referenced as T_buffer. In case of not hearing the acknowledgement frame from the access point AP to node 4, node 3 will transmit its own acknowledgement frame to the access point AP after a certain time ACK_time_out in case of a successful reception.

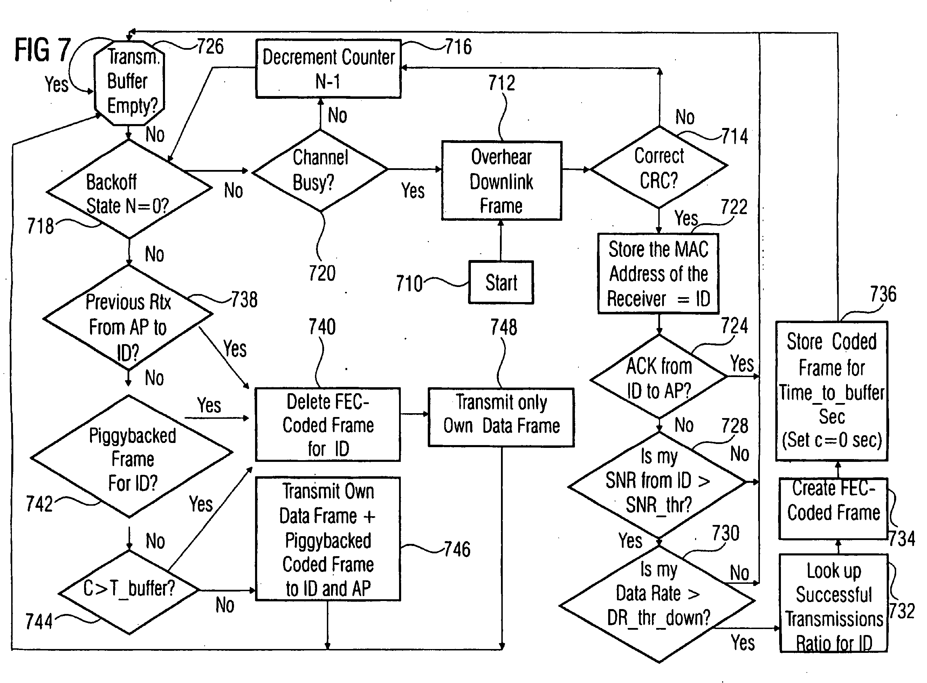

The following figures 7, 8, and 9 illustrate flow charts for an exemplified relay apparatus, an exemplified access point, and an exemplified receiver, illustrating an embodiment of the present invention for downlink transmission.

Fig. 7 shows a flow chart illustrating an embodiment of an inventive relay apparatus. The relay apparatus starts with step 710 followed by a step 712, in which it overhears downlink data frames. Following step 712, it tries to compute correct CRCs of overheard downlink frames in step 714. If the relay apparatus cannot compute a correct CRC, it moves on to step 716, in which a back-off period counter is decremented, exemplified by the counter N in the example in Fig. 7. After the back-off period counter was decremented in step 716, the relay apparatus checks in step 718 whether the end of the back-off state has been reached, similar to what was described above. If the end of the back-off-state has not been reached yet, the relay apparatus moves on to step 720, in which it checks whether the channel is busy and if so, it moves on to step 712, where it tries to overhear downlink frames.

If the channel is not busy as detected in step 720, the receiver apparatus follows with step 716, at which it decrements the counter N. If the relay apparatus manages to compute a correct CRC in step 714, it moves on to step 722, in which it stores the MAC address of the intended receiver of the data frame, and moves on to step 724, where the relay apparatus checks whether an acknowledgement frame was received from the corresponding receiver. If an acknowledgement frame is overheard, the relay apparatus moves on to step 726, in which the transmission buffer is monitored for available data frames.

If no acknowledgement frame is received in step 724, the relay apparatus moves on to step 728, in which it verifies in this embodiment of the present invention, whether the SNR from the intended receiver is greater than SNR_thr in step 728. If the requirement is not fulfilled, the relay apparatus moves on to step 726, where the transmission buffer is monitored. If in step 728, the requirement is fulfilled, the relay apparatus checks in step 730, whether its own data rate to transmit to the access point AP is greater than DR_thr_down and if this requirement is not fulfilled, it returns to step 726. If the requirement in step 730 is fulfilled, the relay apparatus moves on to step 732, in which it looks up the successful transmission ratio for the respective receiver in step 732, it creates an FEC-coded frame in step 734, stores the coded frame starting the corresponding timer in step 736, and returns to step 726, in which it monitors the transmission buffer.

For as long as the transmission buffer remains empty in step 726, the relay apparatus stays in this state. Once data for transmission is available, the relay apparatus moves on to step 718, where the back-off state is monitored. Once the end of the back-off state is reached, i.e. N=0, the relay apparatus moves on to step 738, in which it verifies whether a retransmission has already been carried out by the access point AP to the respective receiver, and if so, it moves on to step 740, in which it deletes the FEC-coded frame. If no retransmission has been carried out by the access point AP yet, the relay apparatus checks in step 742, whether another relay apparatus has transmitted a piggybacked frame for the respective receiver. If neither a retransmission had been carried out as part of step 738, nor a piggyback frame has been sent according to step 742, the relay apparatus checks in step 744, whether the limit time T_Buffer has elapsed or not. If not, it transmits its own data frame plus the piggybacked coded frame for the respective receiver in the step 746. If either a retransmission by the access point AP has occurred, another relay apparatus has sent a piggybacked frame, or if the limit time T_Buffer has been exceeded the FEC-coded frame is deleted in step 740, and the relay apparatus only transmits its own data frame in step 748. After the transmission of the data frame or the data frame and the piggybacked frame, the relay apparatus returns to step 726, in which the transmission buffer is monitored.

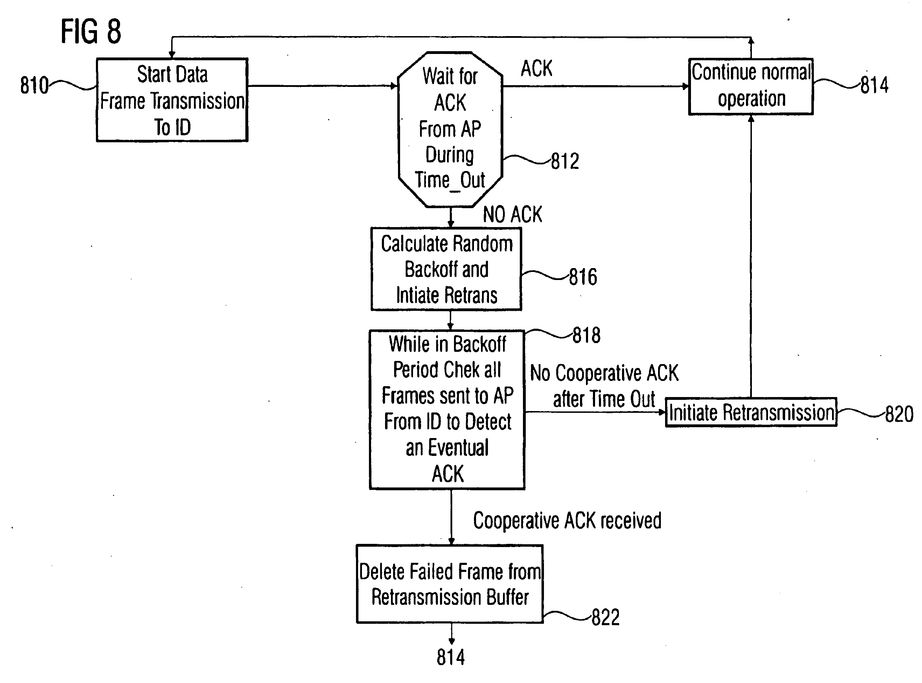

Fig. 8 shows a flowchart of an exemplified access point (first partner transceiver) during downlink transmission. The access point AP starts with the transmission of a data frame in step 810. After the data frame has been transmitted, the access point moves on to step 812, in which it waits for an acknowledgement from the respective receiver, respectively, it waits for an expiry of the timer Time_Out. If an acknowledgement is received from the respective receiver, the access point AP moves on to step 814, in which it continues with normal operation, i.e. reverting to step 810 transmitting the next data frame. If in step 812, the timer expires before an acknowledgement was received from the respective receiver, the access point AP moves on to step 816, in which it calculates a random back off, and initiates a retransmission. During the back-off period, the access point AP tracks all frames received from other transmitters in order to detect an eventual acknowledgement in step 818. If no acknowledgement or cooperative acknowledgement is received within the back-off period, which corresponds to another time-out, a retransmission is initiated in step 820, upon which the access point AP continues with normal operation in step 814. If a cooperative acknowledgement is received in step 818, the respective frame is deleted from the retransmission buffer in step 822, and the access point AP continues with normal operation in step 814.

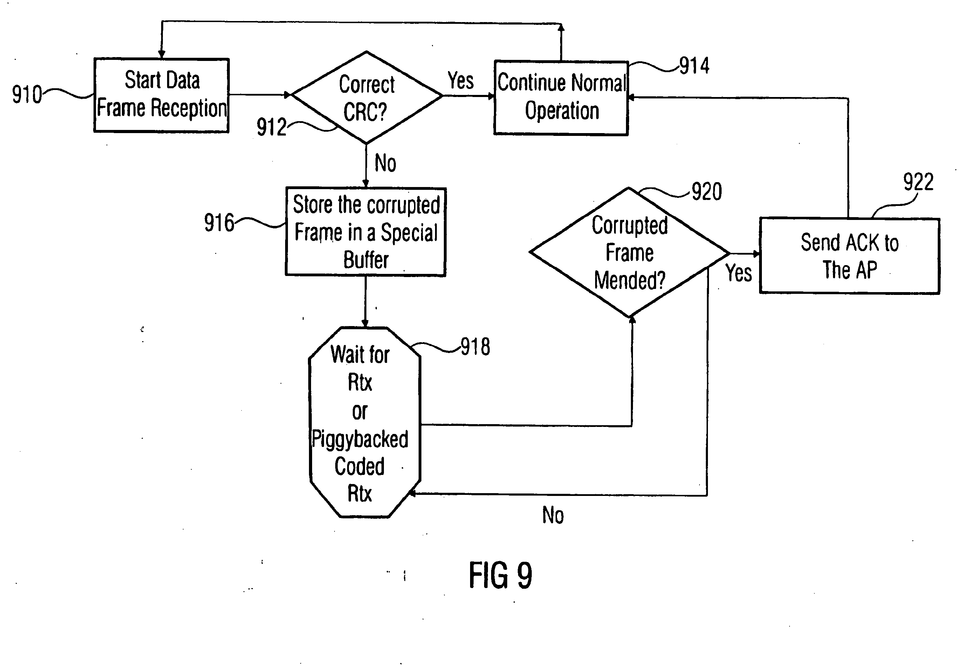

Fig. 9 shows a flow chart for an exemplified receive terminal (second partner transceiver). The receive terminal starts in step 910, in which it receives a data frame. After the reception of the data frame in step 910, it continues with attempting to compute the correct CRC in step 912. If it succeeds computing the correct CRC in step 912, it continues with normal operation in step 914, which is followed by the transmission of the next data frame reverting to step 910. If the receive terminal does not succeed in computing a correct CRC in step 912, it continues in step 916 by storing the corrupted frame in a special buffer. After the corrupted frame was stored in the buffer in step 916, the receive terminal moves on to step 918, in which it waits for a retransmission or a piggybacked coded retransmission. When it receives a retransmission or a piggybacked coded retransmission, it tries to mend the corrupted frame in step 920, and for as long as it does not succeed in computing the correct CRC, it reverts back to step 918 until the corrupted frame is mended in step 920, upon which it sends an acknowledgement frame to its associated access point in step 922. After having sent the acknowledgement frame in step 922, the receive terminal continues with normal operation in step 914.

In some embodiments of the present invention and in order to avoid a domino effect for the retransmission of coded data frames, every data frame has a flag, i.e. for example a 1-bit indicator that indicates whether the frame should be retransmitted or not. Every data frame can have the retransmission flag set to 1, meaning "retransmission allowed", a consecutive number of times M so that up to M coded packets that were not acknowledged can be combined and piggybacked. The parameter M has to be chosen so as to not exceed the possible maximum packet size constraint, and not to degrade the system performance. It can for instance be set by the network administrator, the manufacturer, or by means of a dynamic or adaptive mechanism. Thus, any piggybacked coded retransmission of a data frame may have the flag set to 0, meaning that the frame cannot be retransmitted by further terminals. Also, it is necessary to specify a limit of time, for example T_buffer, for, keeping a packet sent by other nodes in the special buffer in order to free the transmission buffer after a reasonable period of time. The suitable setting of the value of T_buffer can help to avoid multiple retransmissions of the same data frame by different partner nodes when successfully transmitted acknowledgement frames are not overheard by all potential cooperative nodes. The time T_buffer is valid in both the intended receiver, either the access point AP or a terminal, and any cooperating node.

Embodiments of the present invention may extend the IEEE 802.11 protocol in order to take full advantage of the inventive relay apparatus, or methods. One possible extension to the IEEE 802.11 protocol is the definition of multi-acknowledgement frames, where a multi-acknowledgement frame is a single frame that carries multiple IEEE 802.11-compliant acknowledgement control frames for a number of transmitters. The multi-acknowledgement frames used to avoid the transmission of separate acknowledgement frames for each transmitter, make the transmission more efficient. However, the default option is to send separate acknowledgement frames for each transmitter.

Another extension may be an adjustable acknowledgement time out parameter. Independent of the usage of the multi-acknowledgement mechanism, the inventive approach suggests increasing the acknowledgement time-out parameter in order to avoid unnecessary retransmissions from the original source, but only up to a given limit in order not to degrade the system performance.

Another extension that embodiments of the present invention may carry out is the inclusion of the original data frames sequence ID in the acknowledgement frames. Independent of the usage of the multi-acknowledgement mechanism embodiments, the present invention suggests including the sequence ID of the acknowledged data frame into the acknowledgement frame in order to discard possible duplications of acknowledgements in the source terminal caused by multiple transmissions from other partner terminals that have not overheard successfully the transmitted acknowledgements.

Another extension that embodiments of the present invention may suggest are the piggybacked coded retransmitted data frames. A terminal T1 that has a data frame in its transmission buffer may piggyback to its own data frame a shorter coded version of a successfully overheard data frame transmitted by another terminal T2 to an access point AP. The resulting data frame is a composed two-in-one data frame, which has the original data frame of the retransmitter node T1 and the parity bits associated to the failed data frame transmitted by T2. The parity bits are given by the particular systematic encoder using T1, which may for example be a Reed-Solomon encoder 256, 224. The error correction capability of the encoder to be used in the retransmitter node T1 is a function of the successful transmission ratio associated with T2, such that the error correction capability increases with the observed frame error ratio of T2. The retransmitter encoders for a given successful transmission ratio do not have to be necessarily the same on all terminals. In this case, however, the access point AP needs to know, which encoder is associated with each potential retransmitter. This information can be sent within the data frame or known a priori by the access point AP. The use of different encoders can provide code diversity in the retransmission to the access point AP, hence improving the ratio of retransmitted data frames that are successfully decoded.

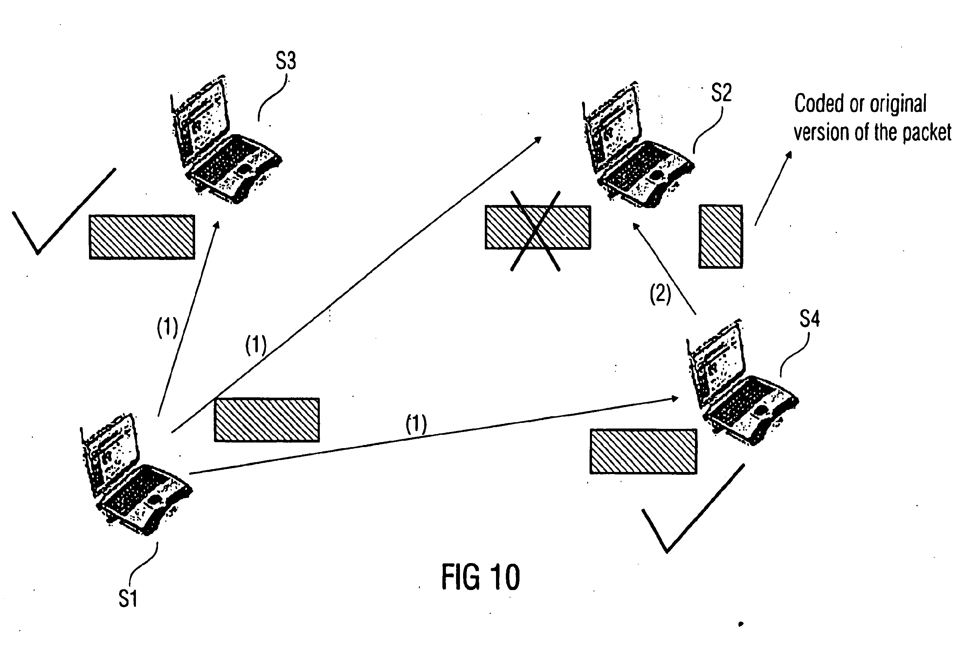

Fig. 10 shows another exemplified scenario in order to illustrate the cooperative coding mechanism. Fig. 10 shows four terminals S1 S2, S3, and S4. In a first step (1), the terminal S1 attempts to transmit a data packet to terminal S2. The terminal S1 correspondingly acts as the first partner transceiver and terminal S2 acts as the second partner transceiver. Terminal S2 fails to compute a correct CRC of that data packet and therewith does not receive the data packet correctly. However, terminals S3 and S4 overhear the packet and manage to compute a correct CRC and are therefore potential relay apparatusses. Now, in a subsequent second step (2) S4 transmits a data packet to S2, which could be the coded or the original version of the first data packet.

In the scenario depicted in Fig. 10, it is assumed that the transmission channel between terminal S4 and terminal S2 allows for a better communication link than the communication channel between terminal S1 and terminal S2. Therewith transmission resources are saved, when terminal S4 does a retransmission for terminal S1. According to the inventive relay apparatus, a help indicator is created if a help required situation is detected. In the scenario depicted in Fig. 10, a help required situation is detected by the terminal S4 in one embodiment of the present invention if the information exchange over the channel between the terminal S4 and the terminal S2 is better than the information exchange over the channel between the terminal S1 and the terminal S2. A better information exchange could mean a better signal-to-noise ratio, a lower bit error ratio, shorter delays, better maximum or average data rates etc.

Furthermore, the inventive relay apparatus corresponding to the terminal S4 in Fig. 10 could carry out error correction mechanisms, and transmit a coded version of the packet received from terminal S1, for instance, utilizing a Reed-Solomon code. The methods described as part of cooperative coding could for example use IEEE 802.11 WLAN systems. The partner selection can be carried out on-the-fly for example by a comparison of relative channel quality related parameters as the ones mentioned above. Data rate and signal-to-noise-ratio-based selection can be considered for transmission mechanisms in the uplink and the downlink. Furthermore, as part of the embodiment utilizing IEEE 802.11e-based networks the selection of cooperative partners could be controlled for example by channel access priorization. Therewith a backward compatibility to WLAN systems could be maintained.

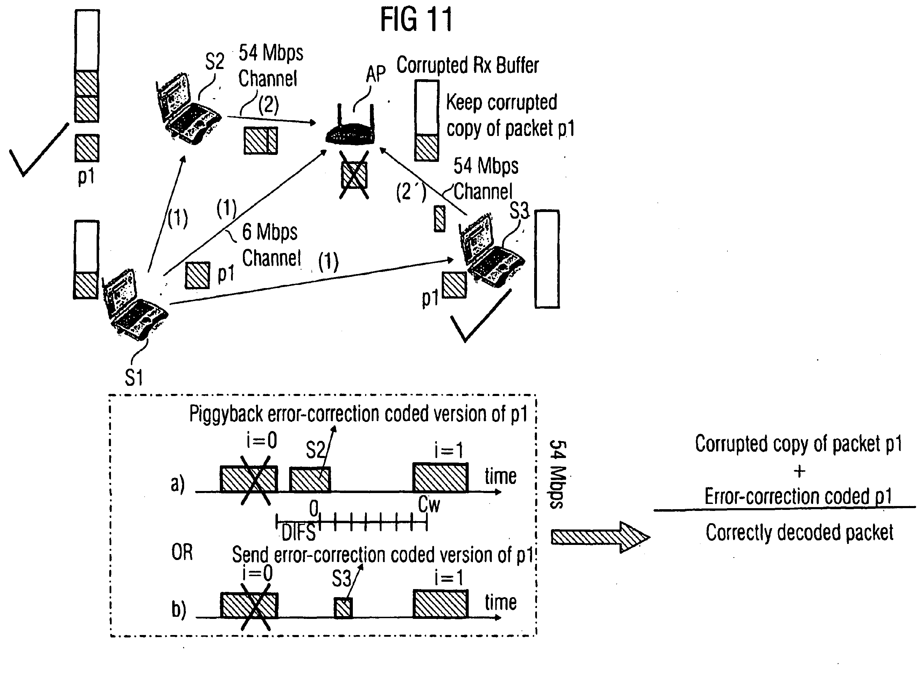

Another example scenario for cooperative coded retransmissions in the uplink is depicted in Fig. 11. At the top of Fig. 11 three terminals S1, S2, and S3 are shown in addition to an access point AP. In a first transmission step (1) terminal S1 (first partner transceiver) transmits a data packet p1 to the access point AP (second partner transceiver), which is not able to compute a correct CRC and so the data packet p1 is not received correctly. Both terminals S2 and S3 overhear the packet p1 and compute the CRC correctly (relay apparatuses). The terminal S1 has a 6 Mbps channel to the access point AP, whereas the terminals S2 and S3 have a 54 Mbps channel towards the access point AP. The terminal S2 has another data packet for transmission in its transmission buffer and detects the help required situation for the terminal S1. Therefore, in a subsequent second transmission step (2) the terminal S2 piggybacks the correctly received data packet p1 to its own data packet, and transmits it towards the access point AP. The access point AP has stored the corrupted copy of the packet p1 in a corrupted-packet receive buffer, and now tries to correctly decode the data packet p1 with the additional received information from the terminal S2. In this example, the terminal S2 would have accessed the transmission channel for its own data packet anyway. In another example, which is denoted by a subsequent transmission step (2') the terminal S3 retransmits the data packet p1, which it has successfully overheard from the transmission step (1). However, terminal S3 does not have own data for transmission available, and so solely transmits the data packet p1.

At the bottom of Fig. 11, the two transmission cases are illustrated along a time axis labeled with case a) and case b). In case a) in a first transmission step i=0, the data packet p1 is not received correctly by the access point AP. The terminal S1 will then enter a back-off period, which is indicated below the time axis of case a by the direct inter-frame space in addition to the contention window. Before the back-off period for terminal S1 elapsed, terminal S2 forwards an error correction coded version of the data packet p1 to the access point AP. Thereupon the access point AP can decode the data packet p1 correctly and no retransmission by the terminal S1 is required. Case b) is similar to what was described above, except for that the terminal S3 forwards the error correction coded version of the data packet p1 without having own data for transmission available. In summary, the access point AP first receives a corrupted copy of packet p1 from the terminal S1 and then receives an error correction coded version of the data packet p1, and combining the two copies of the data packet p1, the access point AP is able to obtain a correctly decoded data packet, e.g. through enabled incremental redundancy combining. In another embodiment of the present invention, the error correction coding is not carried out but the data packets are forwarded in their originally coded state enabling chase combining. Again referring to the IEEE 802.11e specification, more specific mechanisms to give higher priority to retransmitted packets or forwarded packets are conceivable.

In one embodiment of the present invention, three conditions have to be fulfilled for a terminal to detect a help required situation. A first condition is to have overheard and successfully computed the frame check sequence of a data packet being transmitted from a first partner transceiver to a second partner transceiver. A second requirement could be to have a stable data rate equal or greater to the data rate that the first partner transceiver has to the second partner transceiver. The data rate of others is for example obtained by overhearing the physical layer convergence procedure headers data rate field. A third requirement could be to have at least one packet ready for transmission in the transmission buffer, this requirement is considered optional and would allow only piggybacked packets, which can be more efficient in certain scenarios. So, a help required situation could be detected if a terminal meets the three conditions but does not overhear any acknowledgement sent from the second partner transceiver to the first partner transceiver, and happens to access the channel before the first partner transceiver. It will then transmit a coded version of the packet to the second transceiver. The second transceiver itself upon successfully decoding the packet, sends back either a separate acknowledgement frame for each of the forwarding transceiver and the first transceiver or it could utilize a multiple acknowledgement frame, which would not be compliant to the current WLAN specifications. Furthermore, other transceivers with coded versions of the original packet remove these versions from their transmission buffers either after overhearing the acknowledgement or the multiple acknowledgement for the original transceiver or after overhearing a number of transmission attempts, which would be either from the original transceiver itself or other helping transceivers, or after a time-out period has elapsed, which is an option to protect against missed acknowledgements, a situation that rarely occurs.

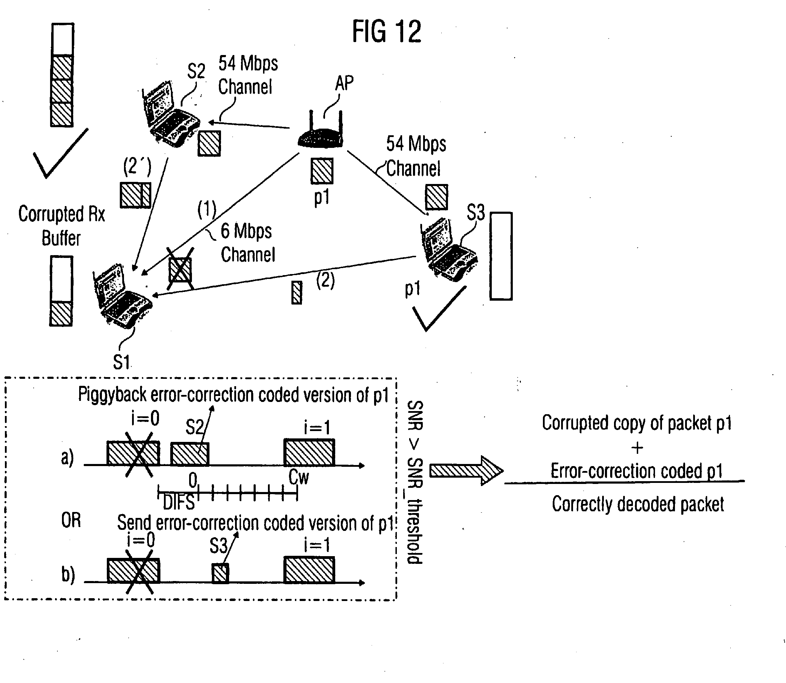

Fig. 12 shows another exemplified scenario for a cooperative coded downlink transmission. At the top of Fig. 12 three terminals S1, S2, and S3 are shown in addition to an access point AP. Similar to the scenario described in Fig. 11, it is assumed that the communication channel between the access point and the terminals S2 and S3 allows for 54 Mbps, whereas the channel between the access point AP and the terminal S1 allows only for 6 Mbits/s. In addition, in this embodiment of the present invention, the terminals S2 and S3 need to determine their support for data rates towards the terminal S1. Again, in one embodiment of the present invention three conditions need to be considered. The first condition could be the average signal-to-noise ratio from the source terminal during a certain time period, for example the last Td seconds, which must be greater or equal than a threshold, for example SNR_ thr. A second condition could be that there is at least one packet waiting in a transmission buffer of the considered transceiver, again this requirement is optional. A third requirement could be that the stable data rate used to transmit or receive successfully a data frame to or from the access point AP must be greater or equal than another threshold, for example, T_Rate_Downlink_Threshold, where the third requirement is dependent on the second requirement.

If a terminal that meets the requirements or conditions does not overhear any acknowledgement frame sent from the respective second partner transceiver to the access point AP (first partner transceiver) and happens to access the channel before the access point AP's retransmission, it will transmit e.g. a coded version or the original packet to the destination terminal and act as relay apparatus. Referring to Fig. 12, this means that in a first transmission step (1) the access point AP (first partner transceiver) tries to transmit a data packet p1 to the terminal S1 (second partner transceiver). The terminal S1 is not able to compute the CRC of the data packet p1 correctly, but stores the corrupted packet in the corrupted receive buffer, and does not send any acknowledgement frame. In a subsequent second transmission step (2), the terminal S3 (relay apparatus), which has successfully received the data packet p1 forwards an error correction coded version of the data packet p1 to the terminal S1 before the access point AP carries out a retransmission. In an alternative embodiment, the terminal S2 (relay apparatus) forwards an error correction coded version of the packet p1 to the terminal S1 in a piggybacked manner in a transmission step (2'). In this example, the terminal S2 had accessed the channel anyway, since it had own data for transmission available.

At the bottom of Fig. 12, the two cases are again illustrated along a time axis distinguishing the cases a) and b). In a first transmission step, i.e. i=0, the access point AP transmits the data packet p1 to the terminal S1, which is not able to receive the data packet p1 correctly. Before the back-off period expires, an error correction coded version of the packet p1 is received from terminal S2 in case a), and a piggybacked error-correction coded version of the packets from terminal S3 in case b), similar to what was described in the example depicted in Fig. 11. The terminal S1 then first receives a corrupted copy of the packet p1 in a first transmission step (i=0), in a second transmission step (i=1) it receives an error correction coded version of the packet p1, and combining them, it is able to obtain a correctly decoded data packet p1.

In one embodiment the version of the packet received by terminal S1 is separately acknowledged by both i.e., the access point for the relay node's packet and consequently the intended destination terminal for the AP, the latter transmission after the former one. Again, other nodes with coded versions of the original packets p1 remove them either after overhearing the acknowledgement frame from the intended destination terminal to the access point, after overhearing a number of transmission attempts from the source or others, or after a time-out period elapsed, for example T_buffer, which is an option to protect against missed acknowledgement frames, which is a situation that rarely occurs.

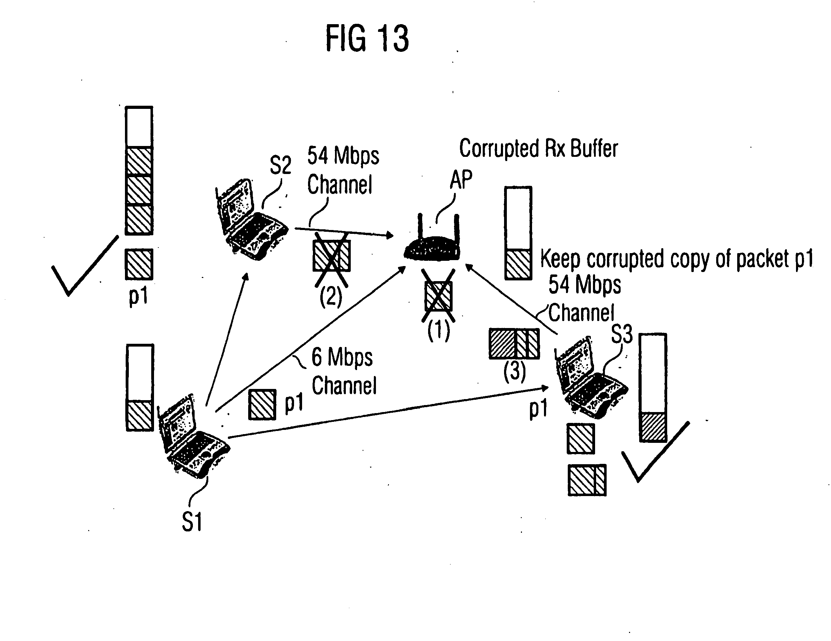

Another embodiment of the present invention is exemplified in Fig. 13, which shows another scenario of cooperative coded transmissions in uplink direction. Fig. 13 shows three terminals S1, S2, and S3 in addition to an access point AP. Similar to what was described utilizing Fig. 11, in a first transmission step (1), the terminal S1 tries to transmit a data packet p1 to the access point through a 6 Mbps channel. The terminals S2 and S3 utilize 54 Mbits/s channels towards the access point. The access point fails to compute a correct CRC for the packet received during the first transmission step (1), but keeps a corrupted copy of the packet p1 in a corrupted-packet reception buffer. Both of the terminals S2 and S3 however, receive the data packet p1 correctly during the first transmission step (1). According to the inventive approach, the terminal S2 forwards the data packet p1 in a second transmission step (2) towards the access point AP. However, in the scenario depicted in Fig. 13, the terminal S2 fails to transmit the piggybacked packet during transmission step (2) successfully. Finally, in a third transmission step (3), terminal S3 forwards the data packet p1 in a piggyback manner to the access point, upon which the access point is now able to obtain a correctly decoded version of the data packet p1.

The terminal S3 forwards in one packet the original data packet p1, the coded-version of the data packet that terminal S2 tried to send in the transmission step (2) and its own data packet. Therewith the access point can now decode the original data packet p1, which was first transmitted during transmission step (1), the additional data packet the terminal S2 sent during the transmission step (2) to which the original data packet p1 was piggybacked to, and another data packet, which was sent by the terminal S3 to which the data packet of terminal S2 and the original data packet p1 were piggybacked to.

If there is no acknowledgement frame detected, which is sent from terminal S1 to the access point AP for a data frame coded and retransmitted by a cooperative terminal, e.g. terminal S2, another node that overheard its transmitted two-in-one data frame can retransmit and does provide coded data for the complete two-in-one frame, including the first data packet. In one embodiment of the present invention, a retransmission flag must be set to 1 in order to indicate that this transmission is a retransmission, respectively, may be retransmitted again. Similarly the scheme can be carried out in the downlink.

Embodiments of the present invention have the advantage that they reduce the amount of traffic sent for example in WLAN systems by making retransmissions more reliable. Furthermore, they increase the overall throughput of for example a WLAN system by reducing the amount of time spent in retransmission. This is possible because high data rate stations are able to retransmit coded packets on behalf of low data rate stations. Furthermore, embodiments of the present invention provide the advantage that they create a cooperative transmission system with MIMO-like features for terminals equipped with single antennas. Moreover, embodiments of the present invention define and specify a practical cooperative retransmission scheme for WLAN systems with only optional modifications to the protocol IEEE 802.11. Embodiments of the present invention carry out partner selection on-the-fly without introducing additional protocol or signaling overhead.

Depending on certain implementation requirements of the inventive methods, the inventive methods can be implemented in hardware or in software. The implementation can be performed using a digital storage medium, in particular a disk, a DVD, or a CD having an electronically readable control signal stored thereon, which cooperates with a programmable computer system such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer, mobile phone, PDA or any portable device capable of connecting to a WLAN.

## Claims

1. Relay apparatus (100) for relaying a data packet to be transmitted from a first partner transceiver to a second partner transceiver, comprising
a receive unit (110) for receiving the data packet and for receiving an acknowledgement packet to be transmitted from the second partners transceiver to the first partner transceiver when the second partner transceiver has successfully received the data packet;
a help detector (120) for providing a help indicator if a help required situation is detected; and
a transmit unit (130) for transmitting the data packet in response to the help indicator;
wherein the help required situation is detected, based on a timer expiry, wherein the timer expiry occurs when the acknowledgement packet is not received, within a certain time interval after reception of the data packet at the relay apparatus (100); and
whether a first communication link between the relay apparatus (100) and the second partner transceiver is better than a second communication link between the first and second partner transceivers, the second communication link being evaluated by an information being available from the data packet.

2. Relay apparatus (100) of claim 1, wherein the help detector (120) is adapted for further detecting the help required situation based on a data rate information on the second communication link available from the data packet and based on whether said data rate information indicates a data rate being lower than a supported data-rate on the first, communication link.

3. Relay apparatus (100) of claim 1 or 2, wherein the help detector (120) is adapted for evaluating the communication links by an information explicitly contained in a control section part or a header part of the data packet.

4. Relay apparatus (100) of one of the claims 1 to 3, wherein the help detector (120) is adapted for evaluating the communication links by an information implicitly available from the data packet.

5. Relay apparatus (100) of claim 4, wherein the information implicitly available from the data packet is inferred from a data packet size, a modulation, a transmission duration or a transmit bandwidth.

6. Relay apparatus (100) of claim 1 to 5, wherein the help detector (120) is adapted for further evaluating the communication links by an evaluation metric based on one of or a combination of the group of a data rate, a signal-to-noise ratio, a packet loss ratio, a bit error ratio or an average number of retransmissions.

7. Relay apparatus (100) of claim 6, wherein the help detector (120) is adapted for receiving the evaluation metric from the receive unit, and wherein the receive unit (110) is adapted for determining the evaluation metric.

8. Relay apparatus (100) of one of the claims 1 to 7, wherein the transmit unit (130) is adapted for determining an own data rate or an own average data rate of a previous transmission from the relay apparatus (100) to the second partner transceiver.

9. Relay apparatus (100) of claim 8, wherein the help detector (120) is adapted for determining the help required situation based on a comparison of the own data rate or the own average data rate to a data rate obtained from the received packet and for providing the help indicator if the own data rate or the own average data rate is larger than the data rate obtained from the received packet.

10. Relay apparatus of one of the claims 1 to 9, therein the help detector (120) is adapted for further determining the help required situation based on an evaluation metric of a third communication link between the relay apparatus (100) and the first partner transceiver.

11. Relay apparatus (100) of one of the claims 1 to 10, wherein the receive unit (110) is adapted for receiving a multi-acknowledgement packet, comprising acknowledgements for received data packets from different transmitters or relay apparatuses.

**12.** Relay apparatus (100) of one of the claims 1 to 12, being adapted for relaying a relayed data packet.

**13.** Relay apparatus (100) of one of the claims 1 to 12, wherein the help detector (120) is adapted for providing a help indicator only if another data packet is available for transmission, the other data packet being created locally at the relay apparatus (100).

**14.** Relay apparatus (100) of claim 13, wherein the transmit unit (130) is adapted for transmitting the data packet and the other data packet together in a common data packet.

**15.** Relay apparatus (100) of one of the claims 1 to 14, wherein the relay apparatus (100) is adapted for classifying a transceiver as a partner transceiver based on whether the help detector (120) can provide help indication following a transmission of a data packet of the transceiver within a time period.

**16.** Relay apparatus (100) of one of the claims 1 to 15, wherein the relay apparatus (100) is adapted for discarding the data packet if the acknowledgement packet being transmitted from the second partner transceiver to the first partner transceiver is received or after a discard time interval has elapsed after the data packet was received.

**17.** Relay apparatus (100) of one of the claims 1 to 16, wherein the transmit unit (130) is adapted for repeating a transmission after a retransmission time has elapsed.

**18.** Relay apparatus (100) of one of the claims 1 to 17, wherein a transmit unit (130) is adapted for including an indicator in a transmission, the indicator indicating if a data packet was received from a partner transceiver.

**19.** Relay apparatus (100) of one of the claims 1 to 18, wherein the receive unit (110) is adapted for applying a CRC check on the data packet and for considering the data packet successfully received if the CRC check is positive.

**20.** Relay apparatus (100) of one of the claims 1 to 19, wherein the receive unit (110) is adapted for receiving a combined acknowledgement packet acknowledging a successful reception of multiple data packets by a transmitter of the combined acknowledgement packet.

**21.** Relay apparatus (100) of one of the claims 1 to 20, wherein the receive unit (110) or the transmit unit (130) is adapted for transcoding the data packet being encoded using a first coding scheme into a second coding scheme, the second coding scheme being different from a coding scheme used for a locally created data packet..

**22.** Relay apparatus (100) of claim 1 to 21, wherein the help detector (120) is adapted for detecting the help required situation based on a number of retransmissions or a retransmission indicator available from the data packet indicating whether a retransmission of a data packet should be carried out, or for detecting the help required situation based on a maximum number of retransmissions.

**23.** Relay apparatus (100) of claim 21, wherein the transmit unit (130) is adapted for adjusting the second coding scheme to the first communication link between the relay apparatus (100) and the second partner transceiver or to the third communication link between the relay apparatus (100) and the first partner transceiver.

**24.** Method for relaying at a relay apparatus a data packet to be transmitted from a first partner transceiver to a second partner transceiver, comprising the steps of
receiving the data packet at the relay apparatus from the first partner transceiver;
detecting reception of the data packet by the second partner transceiver by receiving an acknowledgement packet at the relay apparatus to be transmitted from the second partner transceiver to the first partner transceiver when the second partner transceiver has successfully received the data packet;
evaluating a first communication link between the relay apparatus (100) and the second partner transceiver;
evaluating a second communication link between the first and second partner transceivers, the second communication link being evaluated by an information being available from the data packet;
providing a help indicator when a help required situation is detected; wherein the help required situation is detected based on
a timer expiry, wherein the timer expiry occurs when the acknowledgement packet is not received at the relay apparatus within a certain time interval after reception of the data packet at the relay apparatus; and whether the first communication link is better than the second communication link; and
transmitting from the relay apparatus to the second transceiver either the original data packet or a coded-version of the data packet in response to the help indicator.

**25.** Computer program having a program code for performing the method according to claim 24, when the program code runs on a computer.

**Patentansprüche**

**1.** Relaisvorrichtung (100) zum Weiterleiten eines Datenpakets, das von einem ersten Partner-Sende/Empfangsgerät zu einem zweiten Partner-Sende/ Empfangsgerät zu übertragen ist, die folgende Merkmale umfasst:

eine Empfangseinheit (110) zum Empfangen des Datenpakets und zum Empfangen eines Bestätigungspakets, das von dem zweiten Partner-Sende/Empfangsgerät zu dem ersten Partner-Sende/Empfangsgerät zu übertragen ist, wenn das zweite Partner-Sende/Empfangsgerät das Datenpaket erfolgreich empfangen hat;
einen Hilfedetektor (120) zum Bereitstellen eines Hilfeindikators, falls eine Hilfe erfordernde Situation erfasst wird; und
eine Sendeeinheit (130) zum Senden des Datenpakets ansprechend auf den Hilfeindikator;
wobei die Hilfe erfordernde Situation erfasst wird basierend
auf einem Ablauf eines Zeitgebers, wobei der Ablauf eines Zeitgebers auftritt, wenn das Bestätigungspaket nicht innerhalb eines bestimmten Zeitintervalls nach dem Empfang des Datenpakets an der Relaisvorrichtung (100) empfangen wird; und
darauf, ob eine erste Kommunikationsverbindung zwischen der Relaisvorrichtung (100) und dem zweiten Partner-Sende/Empfangsgerät besser ist als eine zweite Kommunikationsverbindung zwischen dem ersten und zweiten Partner-Sende/Empfangsgerät, wobei die zweite Kommunikationsverbindung bewertet wird durch eine Information, die von dem Datenpaket verfügbar ist.

**2.** Relaisvorrichtung (100) gemäß Anspruch 1, bei der der Hilfedetektor (120) angepasst ist, um ferner die Hilfe erfordernde Situation zu erfassen, basierend auf einer Datenrateninformation über die zweite Kommunikationsverbindung, die von dem Datenpaket verfügbar ist, und basierend darauf, ob die Datenrateninformation anzeigt, dass eine Datenrate niedriger ist als eine unterstützte Datenrate auf der ersten Kommunikationsverbindung.

**3.** Relaisvorrichtung (100) gemäß Anspruch 1 oder 2, bei der der Hilfedetektor (120) angepasst ist zum Bewerten der Kommunikationsverbindungen durch eine Information, die explizit in einem Steuerabschnittteil oder einem Anfangsblock des Datenpakets enthalten ist.

**4.** Relaisvorrichtung (100) gemäß einem der Ansprüche 1 bis 3, bei der der Hilfedetektor (120) angepasst ist zum Bewerten der Kommunikationsverbindungen durch eine Information, die implizit von dem Datenpaket verfügbar ist.

**5.** Relaisvorrichtung (100) gemäß Anspruch 4, bei der die Information, die implizit von dem Datenpaket verfügbar ist, abgeleitet wird von einer Datenpaketgröße, einer Modulation, einer Übertragungsdauer oder einer Sendebandbreite.

**6.** Relaisvorrichtung (100) gemäß einem der Ansprüche 1 bis 5, bei der der Hilfedetektor (120) angepasst ist zum weiteren Bewerten der Kommunikationsverbindung durch eine Bewertungsmetrik, basierend auf einem oder einer Kombination von der Gruppe bestehend aus einer Datenrate, einem Signal/Rausch-Verhältnis, einem Paketverlustverhältnis, einem Bitfehlerverhältnis oder einer durchschnittlichen Anzahl von erneuten Übertragungen.

**7.** Relaisvorrichtung (100) gemäß Anspruch 6, bei der der Hilfedetektor (120) angepasst ist zum Empfangen der Bewertungsmetrik von der Empfangseinheit, und wobei die Empfangseinheit (110) angepasst ist zum Bestimmen der Bewertungsmetrik.

**8.** Relaisvorrichtung (100) gemäß einem der Ansprüche 1 bis 7, bei der die Sendeeinheit (130) angepasst ist zum Bestimmen einer eigenen Datenrate oder einer eigenen mittleren Datenrate einer vorhergehenden Übertragung von der Relaisvorrichtung (100) zu dem zweiten Partner-Sende/Empfangsgerät.

**9.** Relaisvorrichtung (100) gemäß Anspruch 8, bei der der Hilfedetektor (120) angepasst ist zum Bestimmen der Hilfe erfordernden Situation basierend auf einem Vergleich der eigenen Datenrate oder der eigenen mittleren Datenrate mit einer Datenrate, die von dem empfangenen Paket erhalten wird, und zum Bereitstellen des Hilfeindikators, falls die eigene Datenrate oder die eigene mittlere Datenrate größer ist als die Datenrate, die von dem empfangenen Paket erhalten wird.

**10.** Relaisvorrichtung (100) gemäß einem der Ansprüche 1 bis 9, bei der der Hilfedetektor (120) angepasst ist zum weiteren Bestimmen der Hilfe erfordernden Situation basierend auf einer Bewertungsmetrik einer dritten Kommunikationsverbindung zwischen der Relaisvorrichtung (100) und dem ersten Partner-Sende/Empfangsgerät.

**11.** Relaisvorrichtung (100) gemäß einem der Ansprüche 1 bis 10, bei der die Empfangseinheit (110) angepasst ist zum Empfangen eines Mehrfach-Bestätigungspakets, das Bestätigungen für empfangene Datenpakete von unterschiedlichen Sendern oder Relaisvorrichtungen umfasst.

**12.** Relaisvorrichtung (100) gemäß einem der Ansprüche 1 bis 12, die angepasst ist zum Weiterleiten eines weitergeleiteten Datenpakets.

**13.** Relaisvorrichtung (100) gemäß einem der Ansprüche 1 bis 12, bei der der Hilfedetektor (120) angepasst ist, um einen Hilfeindikator nur bereitzustellen, falls ein anderes Datenpaket für die Übertragung verfügbar ist, wobei das andere Datenpaket lokal an der Relaisvorrichtung (100) erzeugt wird.

**14.** Relaisvorrichtung (100) gemäß Anspruch 13, bei der die Sendeeinheit (130) angepasst ist zum Senden des Datenpakets und des anderen Datenpakets zusammen in einem gemeinsamen Datenpaket.

**15.** Relaisvorrichtung (100) gemäß einem der Ansprüche 1 bis 14, wobei die Relaisvorrichtung (100) angepasst ist zum Klassifizieren eines Sende/Empfangsgeräts als ein Partner-Sende/Empfangsgerät basierend darauf, ob der Hilfedetektor (120) nach einer Übertragung eines Datenpakets des Sende/Empfangsgeräts innerhalb einer Zeitperiode eine Hilfeanzeige bereitstellen kann.

**16.** Relaisvorrichtung (100) gemäß einem der Ansprüche 1 bis 15, wobei die Relaisvorrichtung (100) angepasst ist zum Löschen des Datenpakets, falls das Bestätigungspaket, das von dem zweiten Partner-Sende/Empfangsgerät zu dem ersten Partner-Sende/Empfangsgerät übertragen wird, empfangen wird, oder nachdem ein Löschzeitintervall verstrichen ist, nachdem das Datenpaket empfangen wurde.

**17.** Relaisvorrichtung (100) gemäß einem der Ansprüche 1 bis 16, bei dem die Sendeeinheit (130) angepasst ist zum Wiederholen einer Übertragung, nachdem eine Erneute-Übertragung-Zeit verstrichen ist.

**18.** Relaisvorrichtung (100) gemäß einem der Ansprüche 1 bis 17, bei der eine Sendeeinheit (130) angepasst ist zum Aufnehmen eines Indikators in einer Übertragung, wobei der Indikator anzeigt, ob ein Datenpaket von einem Partner-Sende/Empfangsgerät empfangen wurde.

**19.** Relaisvorrichtung (100) gemäß einem der Ansprüche 1 bis 18, bei der die Empfangseinheit (110) angepasst ist zum Anwenden einer CRC-Prüfung an dem Datenpaket und zum Betrachten des Datenpakets als erfolgreich empfangen, falls die CRC-Prüfung positiv ist.

**20.** Relaisvorrichtung (100) gemäß einem der Ansprüche 1 bis 19, bei der die Empfangseinheit (110) angepasst ist zum Empfangen eines kombinierten Bestätigungspakets, das einen erfolgreichen Empfang von mehreren Datenpaketen durch einen Sender des kombinierten Bestätigungspakets bestätigt.

**21.** Relaisvorrichtung (100) gemäß einem der Ansprüche 1 bis 20, bei der die Empfangseinheit (110) oder die Sendeeinheit (130) angepasst ist zum Umcodieren des Datenpakets, das unter Verwendung eines ersten Codierschemas codiert wurde, in ein zweites Codierschema, wobei das zweite Codierschema sich von einem Codierschema unterscheidet, das für ein lokal erzeugtes Datenpaket verwendet wird.

**22.** Relaisvorrichtung (100) gemäß einem der Ansprüche 1 bis 21, bei der der Hilfedetektor (120) angepasst ist zum Erfassen der Hilfe erfordernden Situation basierend auf einer Anzahl von erneuten Übertragungen, oder einem Erneute-Übertragung-Indikator, der von dem Datenpaket verfügbar ist, der anzeigt, ob eine erneute Übertragung eines Datenpakets ausgeführt werden sollte, oder zum Erfassen der Hilfe erfordernden Situation basierend auf einer maximalen Anzahl von erneuten Übertragungen.

**23.** Relaisvorrichtung (100) gemäß Anspruch 21, bei der die Sendeeinheit (130) angepasst ist zum Einstellen des zweiten Codierschemas auf die erste Kommunikationsverbindung zwischen der Relaisvorrichtung (100) und dem zweiten Partner-Sende/Empfangsgerät oder auf die dritte Kommunikationsverbindung zwischen der Relaisvorrichtung (100) und dem ersten Partner-Sende/Empfangsgerät.

**24.** Verfahren zum Weiterleiten eines Datenpakets an einer Relaisvorrichtung, das von einem ersten Partner-Sende/Empfangsgerät zu einem zweiten Partner-Sende/Empfangsgerät zu übertragen ist, das folgende Schritte umfasst:

Empfangen des Datenpakets an der Relaisvorrichtung von dem ersten Partner-Sende/Empfangsgerät;
Erfassen des Empfangs des Datenpakets durch das zweite Partner-Sende/Empfangsgerät durch Empfangen eines Bestätigungspakets an der.Relaisvorrichtung, das von dem zweiten Partner-Sende/Empfangsgerät zu dem ersten Partner-Sende/Empfangsgerät zu übertragen ist, wenn das zweite Partner-Sende/Empfangsgerät das Datenpaket erfolgreich empfangen hat;
Bewerten einer ersten Kommunikationsverbindung zwischen der Relaisvorrichtung (100) und dem zweiten Partner-Sende/Empfangsgerät;
Bewerten einer zweiten Kommunikationsverbindung zwischen dem ersten und dem zweiten Partner-Sende/Empfangsgerät, wobei die zweite Kommunikationsverbindung bewertet wird durch eine Information, die von dem Datenpaket erhältlich ist;
Bereitstellen eines Hilfeindikators, wenn eine Hilfe erfordernde Situation erfasst wird;
wobei die Hilfe erfordernde Situation erfasst wird basierend
auf einem Ablauf eines Zeitgebers, wobei der Ablauf eines Zeitgebers auftritt, wenn das Bestätigungspaket nicht innerhalb eines bestimmten Zeitintervalls nach dem Empfang des Datenpakets an der Relaisvorrichtung an der Relaisvorrichtung empfangen wird; und
darauf, ob die erste Kommunikationsverbindung besser ist als die zweite Kommunikationsverbindung; und
Übertragen von entweder dem ursprünglichen Datenpaket oder einer codierten Version des Datenpakets von der Relaisvorrichtung zu dem zweiten Sende/Empfangsgerät, ansprechend auf den Hilfeindikator.

**25.** Computerprogramm mit einem Programmcode zum Durchführen des Verfahrens gemäß Anspruch 24, wenn der Programmcode auf einem Computer läuft.

**Revendications**

**1.** Appareil relais (100) pour relayer un paquet de données à transmettre d'un premier émetteur-récepteur de partenaire vers un deuxième émetteur-récepteur de partenaire, comprenant
une unité de réception (110) destinée à recevoir le paquet de données et à recevoir un paquet de confirmation à transmettre du deuxième émetteur-récepteur de partenaire vers le premier émetteur-récepteur de partenaire lorsque le deuxième émetteur-récepteur de partenaire a reçu avec succès le paquet de données;
un détecteur d'assistance (120) destiné à fournir un indicateur d'assistance s'il est détecté une situation de nécessité d'assistance; et
une unité de transmission (130) destinée à transmettre le paquet de données en réponse à l'indicateur d'assistance;
dans lequel la situation de nécessité d'assistance est détectée sur base d'une expiration de temporisation, dans lequel l'expiration de temporisation se produit lorsque le paquet de confirmation n'est pas reçu dans un certain intervalle de temps après la réception du paquet de données à l'appareil relais (100); et
si une première liaison de communication entre l'appareil relais (100) et le deuxième émetteur-récepteur de partenaire est meilleure qu'une deuxième liaison de communication entre les premier et deuxième émetteurs-récepteurs de partenaire, la deuxième liaison de communication étant évaluée par une information disponible à partir du paquet de données.

**2.** Appareil relais (100) selon la revendication 1, dans lequel le détecteur d'assistance (120) est adapté pour détecter par ailleurs la situation de nécessité d'assistance sur base d'une information de débit de données sur la deuxième liaison de communication disponible du paquet de données et sur base de si ladite information de débit de données indique un débit de données inférieur à un débit de données supporté sur la première liaison de communication.

**3.** Appareil relais (100) selon la revendication 1 ou 2, dans lequel le détecteur d'assistance (120) est adapté pour évaluer les liaisons de communication par une information contenue explicitement dans une partie de segment de commande ou une partie d'en-tête du paquet de données.

4. Appareil relais (100) selon l'une des revendications 1 à 3, dans lequel le détecteur d'assistance (120) est adapté pour évaluer les liaisons de communication par une information disponible implicitement à partir du paquet de données.

5. Appareil relais (100) selon la revendication 4, dans lequel l'information disponible implicitement à partir du paquet de données est présumée à partir d'une grandeur de paquet de données, d'une modulation, d'une durée de transmission ou d'une largeur de bande de transmission.

6. Appareil relais (100) selon les revendications 1 à 5, dans lequel le détecteur d'assistance (120) est adapté pour évaluer par ailleurs les liaisons de communication par une métrique d'évaluation sur base de l'un ou d'une combinaison parmi le groupe composé d'un débit de données, d'un rapport signal-bruit, d'un rapport de perte de paquet, d'un rapport d'erreur sur le bit ou d'un nombre moyen de retransmissions.

7. Appareil relais (100) selon la revendication 6, dans lequel le détecteur d'assistance (120) est adapté pour recevoir la métrique d'évaluation de l'unité de réception, et dans lequel l'unité de réception (110) est adaptée pour déterminer la métrique d'évaluation.

8. Appareil relais (100) selon l'une des revendications 1 à 7, dans lequel l'unité de transmission (130) est adapté pour déterminer un débit de données propre ou un débit de données moyen propre d'une transmission précédente de l'appareil relais (100) ver le deuxième émetteur-récepteur de partenaire.

9. Appareil relais (100) selon la revendication 8, dans lequel le détecteur d'assistance (120) est adapté pour déterminer la situation de nécessité d'assistance sur base d'une comparaison du débit de données propre ou du débit de données moyen propre avec un débit de données obtenu du paquet reçu et pour fournir l'indicateur d'assistance si le débit de données propre ou le débit de données moyen propre est supérieur au débit de données obtenu du paquet reçu.

10. Appareil relais selon l'une des revendications 1 à 9, dans lequel le détecteur d'assistance (120) est adapté pour déterminer par ailleurs la situation de nécessité d'assistance sur base d'une métrique d'évaluation d'une troisième liaison de communication entre l'appareil relais (100) et le premier émetteur-récepteur de partenaire.

11. Appareil relais (100) selon l'une des revendications 1 à 10, dans lequel l'unité de réception (110) est adaptée pour recevoir un paquet de confirmation multiple comprenant des confirmations pour les paquets de données reçus de différents émetteurs ou appareils relais.

12. Appareil relais (100) selon l'une des revendications 1 à 12, adapté pour relayer un paquet de données relayé.

13. Appareil relais (100) selon l'une des revendications 1 à 12, dans lequel le détecteur d'assistance (120) est adapté pour fournir un indicateur d'assistance uniquement si un autre paquet de données est disponible pour transmission, l'autre paquet de données étant créé localement à l'appareil relais (100).

14. Appareil relais (100) selon la revendication 13, dans lequel l'unité de transmission (130) est adaptée pour transmettre le paquet de données et l'autre paquet de données ensemble dans un paquet de données commun.

15. Appareil relais (100) selon l'une des revendications 1 à 14, dans lequel l'appareil relais (100) est adapté pour classifier un émetteur-récepteur comme émetteur-récepteur de partenaire sur base de si le détecteur d'assistance (120) peut fournir une indication d'assistance suivant une transmission d'un paquet de données de l'émetteur-récepteur dans un laps de temps.

16. Appareil relais (100) selon l'une des revendications 1 à 15, dans lequel l'appareil relais (100) est adapté pour éliminer le paquet de données si le paquet de confirmation transmis du deuxième émetteur-récepteur de partenaire vers le premier émetteur-récepteur de partenaire est reçu ou après que se soit écoulé un laps de temps d'élimination après que le paquet de données ait été reçu.

17. Appareil relais (100) selon l'une des revendications 1 à 16, dans lequel l'unité de transmission (130) est adaptée pour répéter une transmission après que se soit écoulé un temps de retransmission time.

18. Appareil relais (100) selon l'une des revendications 1 à 17, dans lequel une unité de transmission (130) est adaptée pour inclure un indicateur dans une transmission, l'indicateur indiquant si un paquet de données a été reçu d'un émetteur-récepteur de partenaire.

**19.** Appareil relais (100) selon l'une des revendications 1 à 18, dans lequel l'unité de réception (110) est adaptée pour appliquer un contrôle CRC au paquet de données et pour considérer que le paquet de données a été reçu avec succès si le contrôle CRC est positif.

**20.** Appareil relais (100) selon l'une des revendications 1 à 19, dans lequel l'unité de réception (110) est adaptée pour recevoir un paquet de confirmation combiné confirmant une réception avec succès de multiples paquets de données par un transmetteur du paquet de confirmation combiné.

**21.** Appareil relais (100) selon l'une des revendications 1 à 20, dans lequel l'unité de réception (110) ou l'unité de transmission (130) est adaptée pour transcoder le paquet de données codé à l'aide d'un premier schéma de codage en un deuxième schéma de codage, le deuxième schéma de codage étant différent d'un schéma de codage utilisé pour paquet de données créé localement.

**22.** Appareil relais (100) selon les revendications 1 à 21, dans lequel le détecteur d'assistance (120) est adapté pour détecter la situation de nécessité d'assistance sur base d'un nombre de retransmissions ou d'un indicateur de retransmission disponible à partir du paquet de données indiquant si une retransmission d'un paquet de données doit être effectuée, ou pour détecter la situation de nécessité d'assistance sur base d'un nombre maximum de retransmissions.

**23.** Appareil relais (100) selon la revendication 21, dans lequel l'unité de transmission (130) est adapté pour ajuster le deuxième schéma de codage à la première liaison de communication entre l'appareil relais (100) et le deuxième émetteur-récepteur de partenaire ou à la troisième liaison de communication entre l'appareil relais (100) et le premier émetteur-récepteur de partenaire.

**24.** Procédé pour relayer dans un appareil relais un paquet de données à transmettre d'un premier émetteur-récepteur de partenaire vers un deuxième émetteur-récepteur de partenaire, comprenant les étapes consistant à
recevoir le paquet de données à l'appareil relais du premier émetteur-récepteur de partenaire;
détecter la réception du paquet de données par le deuxième émetteur-récepteur de partenaire en recevant un paquet de confirmation à l'appareil relais à transmettre du deuxième émetteur-récepteur de partenaire vers le premier émetteur-récepteur de partenaire lorsque le deuxième émetteur-récepteur de partenaire a reçu avec succès le paquet de données;
évaluer une première liaison de communication entre l'appareil relais (100) et le deuxième émetteur-récepteur de partenaire;
évaluer une deuxième liaison de communication entre les premier et deuxième émetteurs-récepteurs de partenaire, la deuxième liaison de communication étant évaluée par une information disponible depuis le paquet de données;
fournir un indicateur d'assistance lorsqu'il est détecté une situation de nécessité d'assistance; dans lequel la situation de nécessité d'assistance est détectée sur base d'une expiration de temporisation, dans lequel l'expiration de temporisation se produit lorsque le paquet de confirmation n'est pas reçu à l'appareil relais dans un certain intervalle de temps après réception du paquet de données à l'appareil relais; et dans lequel la première liaison de communication est meilleure que la deuxième liaison de communication; et
transmettre de l'appareil relais vers le deuxième émetteur-récepteur soit le paquet de données original, soit une version codée du paquet de données en réponse à l'indicateur d'assistance.

**25.** Programme d'ordinateur ayant un code de programme pour réaliser le procédé selon la revendication 24 lorsque le code de programme est exécuté sur un ordinateur.

transmit unit
130
receive unit
help detector
110
120
100

FIG 1

6 Mbps
9 Mbps
12 Mbps
18 Mbps
24 Mbps
36 Mbps
48 Mbps
54 Mbps
AP
Node 2
Node 1

FIG 2

FIG 3
Transm. Buffer Empty?
326
Yes
No
Decrement Counter N-1
316
Backoff State N=0?
318
No
Channel Busy?
320
No
Yes
Overhear Uplink Frame from Other Term.
312
Start
310
Correct CRC?
314
No
Yes
Store the MAC Address of the Transmittet = ID
322
Yes
Previous Rtx From ID to AP?
336
Yes
No
Delete FEC-Coded Frame for ID
338
Transmit only Own Data Frame
346
ACK from AP to ID?
324
Yes
No
Is my Data Rate> DR_thr_up?
328
No
Yes
Store Coded Frame for Time_to_buffer Sec (Set c=0 sec)
334
Previous Coded Tx on Behalf of ID By Other Node
340
Yes
No
Transmit Own Data Frame + Piggybacked Coded Frame From ID to AP
344
C>T_buffer?
342
Yes
No
Set Error Correction Capability According To Radio of Successful Transmissions by ID
330
Create FEC-Coded Frame
332

410
Start Data Frame Reception
412
Correct CRC?
Yes
No
414
Continue Normal Operation
416
Store the corrupted Frame in a Special Buffer
418
Wait for Rtx or Piggybacked Coded Rtx
No RTx Detected
RTx Detected
420
Corrupted Frame Mended?
Yes
No
422
Send (multi-) ACK to source node (s)


FIG 4

FIG 5
510
Start Data Frame Transmission
Wait for ACK From AP During Time_Out
512
ACK
Continue normal operation
514
NO ACK
Calculate Random Backoff and Intiate Retrans
516
While in Backoff Period Chek all ACKs sent by AP to Detected an Eventual Cooperative ACK for my Failed Data Frame
518
No Cooperative ACK during Backoff
Initiate Retransmission
520
Cooperative ACK received during Backoff
Delete Failed Frame from Transmission Buffer
522
514

Node 3
6 Mbps
9 Mbps
12 Mbps
18 Mbps
24 Mbps
36 Mbps
48 Mbps
Node 4
54 Mbps
AP

FIG 6

FIG 7
Transm. Buffer Empty?
726
Yes
No
Decrement Counter N-1
716
712
Backoff State N=0?
718
No
Channel Busy?
No
Yes
720
Overhear Downlink Frame
Start
710
Correct CRC?
714
No
Yes
722
Store the MAC Address of the Receiver = ID
Previous Rtx From AP to ID?
738
Yes
No
740
748
ACK from ID to AP?
724
Yes
No
736
Store Coded Frame for Time_to_buffer Sec (Set c=0 sec)
Delete FEC-Coded Frame for ID
Transmit only Own Data Frame
Piggybacked Frame For ID?
742
Yes
No
Is my SNR from ID > SNR_thr?
728
No
Yes
Create FEC-Coded Frame
734
Transmit Own Data Frame + Piggybacked Coded Frame to ID and AP
746
Is my Data Rate > DR_thr_down?
730
No
Yes
Look up Successful Transmissions Ratio for ID
732
C>T_buffer?
744
Yes
No

FIG 8
810
Start Data Frame Transmission To ID
Wait for ACK From AP During Time_Out
812
ACK
Continue normal operation
814
NO ACK
Calculate Random Backoff and Intiate Retrans
816
While in Backoff Period Chek all Frames sent to AP From ID to Detect an Eventual ACK
818
No Cooperative ACK after Time Out
Initiate Retransmission
820
Cooperative ACK received
Delete Failed Frame from Retransmission Buffer
822
814

910
Start Data Frame Reception
912
Correct CRC?
Yes
No
914
Continue Normal Operation
916
Store the corrupted Frame in a Special Buffer
918
Wait for Rtx or Piggybacked Coded Rtx
920
Corrupted Frame Mended?
Yes
No
922
Send ACK to The AP

FIG 9

S3
S2
Coded or original
version of the packet
(2)
S4
(1)
(1)
(1)
S1

FIG 10

FIG 11

S2
54 Mbps
Channel
(2)
AP
Corrupted Rx Buffer
Keep corrupted
copy of packet p1
54 Mbps
Channel
(2´)
S3
p1
(1)
(1)
6 Mbps
Channel
(1)
p1
p1
S1
Piggyback error-correction coded version of p1
i=0
S2
i=1
a)
time
0
Cw
DIFS
OR
Send error-correction coded version of p1
i=0
S3
i=1
b)
time
54 Mbps
Corrupted copy of packet p1
+
Error-correction coded p1
Correctly decoded packet

AP
p1
54 Mbps
Channel
S3
p1
54 Mbps
Channel
S2
(1)
6 Mbps
Channel
(2)
(2´)
Corrupted Rx
Buffer
S1
SNR > SNR_threshold
Corrupted copy of packet p1
+
Error-correction coded p1
Correctly decoded packet
Piggyback error-correction coded version of p1
a)
i=0
S2
0
DIFS
Cw
i=1
OR
Send error-correction coded version of p1
b)
i=0
S3
i=1

FIG 12

FIG 13
Corrupted Rx Buffer
Keep corrupted copy of packet p1
54 Mbps
Channel
AP
(1)
(3)
S3
p1
54 Mbps
Channel
(2)
6 Mbps
Channel
p1
S2
S1
p1

FIG 14a
1400
1410
State of the art
FIG 14b
1400
1420
1410
State of the art
FIG 14c
1400
1410
1420
State of the art

FIG 15a

Sh
HR
RTS
CTS
Ss
Sd
STA2
STA1

State of the art

FIG 15b

Sh
DATA
DATA
ACK
Ss
Sd
STA2
STA1

State of the art

FIG 16
S2
AP
S3
S1
I=(1), (2), (3)
I=(1), (2), (3)
I=(1), (2), (3)
p1
time axis
i=1
i=2
i=3
ACK
0
DIFS
0
DIFS
Backoff < 2 cw_min
Backoff < 4 cw_min
time
State of the art

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040266339 A1
- EP 1758268 A2
- WO 2007000742 A2


### Non-patent literature cited in the description


- **M. HEUSSE ; F. ROUSSEAU ; G. BERGER-SABATTEL ; A. DUDA.** Performance Anomaly of IEEE 802.11b. *Proc. of INFOCOM,* 2003
- **A. NOSRATINIA ; T. E. HUNTER ; A. HEDAYAT.** Cooperative Communication in Wireless Networks. *IEEE Communications Magazine,* October 2004
- **A. SENDONARIS ; E. ERKIP ; B. AAZHANG.** User cooperation diversity-Part I: System Description. *IEEE Trans. Commun.,* November 2003, vol. 51 (11), 1927-1938
- **A. SENDONARIS ; E. ERKIP ; B. AAZHANG.** User cooperation diversity- Part II: Implementation aspects and performance analysis. *IEEE Transaction on Communications,* November 2003, vol. 51 (11), 1939-1948
- **N. LANEMAN ; G. W. WORNELL.** Energy-efficient antenna sharing and relaying for wireless networks. *Proc. IEEE Wireless Communications and Networking Conference,* September 2000, 7-12
- **S. SHANKAR ; C. CHOU ; M. GHOSH.** Cooperative Communication MAC (CMAC) - A New MAC Protocol for Next Generation Wireless LANs. *Proc. of the IEEE International Conference on Wireless Networks, Communications and Mobile Computing,* 2005
- **P. LIU ; Z. TAO ; S. PANWAR.** A Cooperative MAC Protocol for Wireless Local Area Networks. *Proc. Of IEEE International Conference on Communications,* 2005
- Cooperative Regions and Partner Choice in Coded Cooperative Systems. *IEEE transactions on communications,* July 2006, vol. 54 (7
- **L. VENTURINO ; X. WANG ; M.LOPS.** Multiuser Detection for Cooperative Networks and Performance Analysis. *IEEE transactions on signal processing,* September 2006, vol. 54 (9
- **Y. WANG ; E. ERKIP ; H. Y. MOK.** Cooperative Source and Channel Coding for Wireless Video Transmission. Polytechnic University
- **T. KORAKIS.** Implementing a cooperative MAC Protocol for wireless LANs. *IEEE ICC 2006 Proceedings,* June 2006, vol. 10
- **P. LIU.** A cooperative MAC Protocol for wireless local area Networks. *Proceedings of IEEE INTERNATIONAL CONFERENCE ON COMMUNICATIONS,* 2005
- **D. N. ROWITCH ; L. B. MILSTEIN.** On the performance of hybrid FEC/ARQ systems using rate compatible punctured turbo (RCPT) codes. *IEEE Trans. On Comm.,* June 2000, vol. 48, 948-959